# EUROPÄISCHE PATENTSCHRIFT

(11) **EP 3 578 765 B1**
(45) Veröffentlichungstag und Bekanntmachung des Hinweises auf die Patenterteilung: **22.06.2022**
(21) Anmeldenummer: 19177173.2
(22) Anmeldetag: 29.05.2019
(51) Int. Cl.: F01K 7/38, F01D 15/10, F01D 25/12, H02K 5/18, H02K 7/18

(54) **BETRIEBSVERFAHREN FÜR EINEN TURBOSATZ UND FÜR EINE NIEDERDRUCKDAMPFTURBINENANLAGE UND NIEDERDRUCKDAMPFTURBINENANLAGE**
LOW PRESSURE STEAM TURBINE SYSTEM AND OPERATING METHOD FOR A TURBO SET AND FOR A LOW PRESSURE STEAM TURBINE SYSTEM
PROCÉDÉ DE FONCTIONNEMENT POUR UN TURBOGÉNÉRATEUR ET POUR UNE INSTALLATION DE TURBINE À BASSE PRESSION ET INSTALLATION DE TURBINE À BASSE PRESSION

(30) Priorität: 08.06.2018 DE 102018209204; 08.06.2018 DE 102018209178; 08.06.2018 DE 102018209203; 08.06.2018 DE 102018209177
(43) Veröffentlichungstag der Anmeldung: 11.12.2019
(73) Patentinhaber: Fludema GmbH, 33100 Paderborn (DE)
(72) Erfinder: Lücke, Philipp, 33100 Paderborn (DE); Jager, Georg, 33613 Bielefeld (DE)
(74) Vertreter: Kohler Schmid Möbus Patentanwälte

(56) Entgegenhaltungen:
- WO-A1-2015/052374
- JP-A- 2011 106 316
- US-A1- 2014 319 843
- US-A1- 2016 344 258
- US-B1- 6 240 730

## Beschreibung

Die Erfindung betrifft ein Betriebsverfahren für einen Turbosatz sowie eine Niederdruckdampfturbinenanlage mit einem Turbosatz.

Zur Umwandlung von thermischer Energie in elektrische Energie werden in der Kraftwerkstechnik sogenannte Turbosätze, d.h. eine Kombination von zumindest einer Turbine und zumindest einem Generator, verwendet. Die Turbine wandelt die ihr zugeführte thermische Energie in mechanische Energie um. Die mechanische Energie wird von der Turbine auf den Generator übertragen. Der Generator wandelt die mechanische Energie in elektrische Energie um.

Generatoren haben einen kleineren Wirkungsgrad als 1 (d.h. < 100%). Ein Teil der zugeführten mechanischen Energie kann nicht in elektrischen Strom umgewandelt werden, sondern wird wieder in thermische Energie umgesetzt, d.h. es tritt eine Verlustleistung in Form von Wärme auf. Die Generatorverluste betragen in der Regel wenige Prozent (ca. 0,5% bis 5%) und gehen dem Gesamtprozess als Abwärme verloren. Selbst bei kleineren Generatoren mit einer Nennleistung von beispielsweise einigen hundert Kilowatt ergibt sich dadurch eine nicht unerhebliche thermische Verlustleistung, die den Generator erwärmt.

In einem Generator befindet sich ein sogenanntes Wicklungspaket (typischerweise umfassend ein Blechpaket und Wicklungen), das in der Regel mit einem Isolationsmaterial (z.B. Epoxid-Harz) beschichtet oder vergossen ist. Dieses Isolationsmaterial hat eine thermische Einsatzgrenze, die bei üblichen Isolationsklassen beispielsweise bei maximal 155°C (Isolationsklasse F) oder bei maximal 180°C (Isolationsklasse H) liegt. Aus Sicherheits- und Lebensdauergründen darf diese Temperatur im Betrieb nicht erreicht oder überschritten werden. Daher werden die Temperaturen in den Wicklungen in der Regel mit einem oder mehreren Thermoelementen überwacht und der Generator wird bei Erreichen einer entsprechend hohen Temperatur (z.B. bei 130 °C bei Isolationsklasse F oder bei 155°C bei Isolationsklasse H) abgeschaltet.

Um eine Überhitzung und damit ein unerwünschtes Zwangsabschalten des Generators zu verhindern, muss dieser folglich permanent und zuverlässig gekühlt werden. Bei herkömmlichen Anlagen kommen unter anderem Kühlsysteme auf Basis von Luft-, Wasser-, Wasser/Glykol- sowie Wasserstoff als Kühlmedium zum Einsatz. Diesen Kühlsystemen ist gemeinsam, dass das jeweilige Kühlmedium (z.B. Luft, Wasser, Wasser/Glykol, Wasserstoff) mit einem geeigneten Fördermittel (Lüfter, Pumpe) zum Generator hin und wieder vom Generator weg gefördert werden muss. Der Generator muss für das jeweilig zum Einsatz kommende Kühlmedium mit entsprechenden Anschlüssen, Wärmetauschern bzw. Oberflächen versehen sein. Des Weiteren muss die Gesamtanlage mit einem Rückkühlwerk für das im Generator aufgewärmte Kühlmedium sowie mit einer messtechnischen Kühlkreislaufüberwachung ausgestattet sein. Solche Kühlsysteme bedingen mithin einen erheblichen apparativen Aufwand, der mit entsprechenden Kosten verbunden ist. Zudem muss für die Durchführung der Kühlung Energie aufgewandt werden.

Aus der EP 3 141 710 A1 ist eine Vorrichtung bekannt geworden, die eine Expansionsmaschine zum Erzeugen von mechanischer Energie durch Expandieren von Dampf eines Arbeitsmediums und einen mit einer Welle der Expansionsmaschine verbundenen Generator zum Erzeugen von elektrischer Energie aus mechanischer Energie der Expansionsmaschine umfasst. Die Expansionsmaschine und der Generator bilden eine bauliche Einheit mit einem Abdampfraum zwischen der Expansionsmaschine und dem Generator, wobei im Betrieb der Expansionsmaschine in den Abdampfraum expandiertes Arbeitsmedium den Generator kontaktiert. Die Vorrichtung umfasst weiterhin Mittel zum Zuführen, insbesondere zum Einspritzen, von Arbeitsmedium in den Abdampfraum. Im Betrieb der Vorrichtung wird mit diesen Mitteln Arbeitsmedium in den Abdampfraum zum Kühlen des expandierten Dampfes zugeführt. Durch das Zuführen des Arbeitsmediums in den Abdampfraum wird die Temperatur im entspannten Medium gesenkt, do dass die Expansionsmaschine für höhere Dampfeintrittstemperaturen (z. B. größer als 130°C) angewendet werden kann. Mittels des durch die Zufuhr von Arbeitsmedium gekühlten, entspannten Mediums wird der Generator gekühlt und vor Überhitzung geschützt.

Aus DE 697 11 728 T2 ist ein hydraulischer Turbinen-Stromgenerator bekannt geworden, aufweisend eine einzelne Wellenanordnung, um ein hydraulisches Turbinenmittel und einen elektrischen Stromgenerator anzubringen, und ein gemeinsames Gehäusemittel für die hydraulische Turbine und den Stromgenerator.

DE 10 2014 216 755 A1 beschreibt ein Verfahren zur Stromerzeugung innerhalb eines Gasnetzes mit erdverlegten Gasleitungen unter Ausnutzung einer Gasentspannung von einem ersten höheren Gasdruckniveau auf ein zweites niedrigeres Gasdruckniveau unter Verwendung wenigstens einer Expansionsmaschine und unter Verwendung wenigstens eines von der Strömungsmaschine angetriebenen Generators. Die Expansionsmaschine kann als Axialturbine ausgebildet sein, wobei der Generator stromaufwärts der Expansionsturbine "schwebend" in einem Turbinengehäuse angeordnet sein kann.

US 2014/319843 A1 beschreibt einen Turbosatz mit einem Generator und einer Leistungsturbine. Die Leistungsturbine treibt den Generator an. Abgas aus einer Brennkammer wird zunächst über eine Gasgenerator-Turbine, welche einen Kompressor antreibt, geleitet. Sodann treibt das Abgas ein Turbinenrad der Leistungsturbine an und wird schließlich über einen Abgasdiffusor in die Umgebung entlassen. Stromabwärts des Turbinenrades der Leistungsturbine liegt ein Druck des Abgases geringfügig unter dem Atmosphärendruck. Ein Durchgang, welcher den Generator umgibt, ist einerseits zur Atmosphäre hin und andererseits zu einem Austrittsbereich der Leistungsturbine hin offen. Durch den Unterdruck des Abgases stromabwärts des Turbinenrades 113 wird kühle Luft aus der Umgebung durch den Durchgang über den Generator gezogen, sodass dieser gekühlt wird. Die Umgebungsluft wird zusammen mit dem Abgas der Leistungsturbine durch den Abgasdiffusor an die Umgebung abgegeben.

Aus JP 2011 106316 A ist ein Turbosatz mit einem Generator und einer Turbine bekannt. Ein Wärmetauscher verdampft ein Kühlmittel, sodass Dampf erhalten wird, welcher der Turbine zugeführt wird, um diese anzutreiben. Nach dem Austritt aus der Turbine wird der Dampf in einem Kondensator gekühlt, sodass er verflüssigt wird. Ein Teil des verflüssigten Kühlmittels wird mittels einer Pumpe durch eine Kühlleitung zur Kühlung des Generators an diesem vorbeigeführt. Nach der Passage des Generators kann ein Teil dieses Kühlmittels mittels eines Steuerventils der Turbine zugeführt werden.

Dampfturbinenanlagen dienen der Umwandlung thermischer Energie in elektrische Energie. Hierzu wird eine Dampfturbine von Dampf durchströmt. Die Dampfturbine wandelt thermische Energie des Dampfes in mechanische Energie. Die Dampfturbine treibt einen Generator an. Der Generator wandelt mechanische Energie aus der Dampfturbine in elektrische Energie um.

Große Dampfturbinenanlagen mit Leistungen einiger zehn bis hundert Megawatt arbeiten im Überdruckbereich. D.h. der Dampf besitzt beim Eintritt in die Turbine einen großen Druck von etwa 200 bis 300 bar. Zur Dampferzeugung werden hierbei großtechnische Feuerungsanlagen eingesetzt.

Hierbei werden konstante Frischdampfparameter angestrebt. Druck- und Temperaturschwankungen werden regelungstechnisch auf ein Minimum begrenzt, um dickwandige Komponenten, wie Ventilkästen und Turbinengehäuse zu schonen. Häufig wird dazu die Dampfturbine in der so genannten Vordruckregelung betrieben. Über mindestens ein Regelventil wird der Massendurchsatz durch die Dampfturbine so variiert, dass der Frischdampfdruck vor der Turbine einem konstanten Sollwert entspricht.

Durch diese Fahrweise wird das isentrope Enthalpiegefälle zwischen Frischdampf und Abdampf weitestgehend konstant gehalten. Mindestens ein Regelventil befindet sich entweder vor der Turbine oder ist in diese integriert. Durch den Regeleingriff des mindestens einen Ventiles entstehen unweigerlich Drosselungsverluste, die sich negativ auf den Wirkungsgrad auswirken. Große Kraftwerksturbosätze werden mit einer konstanten Drehzahl betrieben. Das führt dazu, dass der Wirkungsgrad der Turbine bei Teillast schnell abfällt.

Die Veröffentlichung "Getriebefreie Kleindampfturbine", VGB PowerTech 4/2008, S. 75-80, beschreibt ein Steuerungskonzept für eine sog. Kleindampfturbine mit einer Leistung von rund 500 kW. Die Dampfturbine wurde von überhitztem Frischdampf mit einem Druck von 16,8 bis 17,6 bar bei 210°C bis 235°C angetrieben. Abdampfseitig herrschte ein Druck von 1,5 bis 4,5 bar. Die Maschinendrehzahl wurde mittels eines Frequenzumrichters vom elektrischen Netz entkoppelt. Es wurden theoretische und experimentelle Untersuchungen vorgenommen, bei welcher Drehzahl die Turbine und die Gesamtanlage ihren jeweils höchsten Wirkungsgrad erreichen, wenn die Leistung vorgegeben ist.

Aus der DE 10 2012 024 526 A1 ist ein solarthermisches Wärmespeicherkraftwerk bekannt geworden. Die Solarstrahlung erwärmt in Solarkollektoren ein Medium eines Primärkreislaufs, von wo es in Wärmespeicher gelangt. Über einen Sekundärkreislauf wird Wärmeträgermedium des Sekundärkreislaufs Dampferzeugern zugeführt. Mindestens einer der Dampferzeuger ist als Entspannungsverdampfer mit einem Absolutdruck von unter 1 bar ausgeführt. Zur Absaugung von nicht kondensierbaren Gasen ist an einem Kondensator eine Vakuumpumpe vorgesehen.

### Aufgabe der Erfindung

Der Erfindung liegt die Aufgabe zugrunde, ein Betriebsverfahren für einen Turbosatz anzugeben, bei dem ein Generator des Turbosatzes zuverlässig und energieeffizient gekühlt wird. Weiter ist es Aufgabe der Erfindung eine Dampfturbinenanlage anzugeben, die eine zuverlässige und energieeffiziente Kühlung eines Generators der Niederdruckdampfturbinenanlage und einen sicheren Betrieb ermöglicht.

### Erfindungsgemäße Betriebsverfahren für einen Turbosatz

Erfindungsgemäß ist ein Betriebsverfahren für einen Turbosatz nach Anspruch 1 vorgesehen.

Der Turbosatz weist eine Turbine und einen Generator auf. Der Generator ist innerhalb einer Zuleitung zu der Turbine angeordnet. Das Betriebsverfahren umfasst die Schritte
b) Einleiten eines gasförmigen Fluids in Form von Dampf in die Zuleitung,
c) Vorbeiführen des Fluids an dem Generator,
d) Antreiben der Turbine mittels des Fluids.

Eine Strömung des Fluids ist erfindungsgemäß von dem Generator zu der Turbine gerichtet. Der Generator ist mit anderen Worten stromaufwärts der Turbine in der Zuleitung angeordnet. Das Fluid strömt zunächst an dem Generator vorbei; sodann treibt das Fluid die Turbine an. Vorzugsweise verläuft die Strömung von dem Generator zu der Turbine geradlinig.

Durch dieses Verfahren wird eine inhärente Generatorkühlung erreicht - sie bedingt sich selbst. Wenn eine Kühlung erforderlich ist, ist diese prozessbedingt auch vorhanden. Eine Generatorkühlung ist dann erforderlich, wenn der Generator mechanische Energie verlustbehaftet in elektrische Energie umwandelt. Dazu bedarf es der Bereitstellung mechanischer Energie in Form einer Drehbewegung einer Welle durch die Turbine, die dafür wiederum von dem Fluid durchströmt werden muss. Dieses Fluid stellt zugleich die Wärmeabfuhr des Generators sicher. Auf zusätzliche Einrichtungen zur Kühlung des Generators kann verzichtet werden. Mithin entsteht auch kein Energiebedarf für den Betrieb solcher Kühleinrichtungen.

Durch die Wärmeaufnahme wird der Energiegehalt des Fluids erhöht, was sich in einer Enthalpieerhöhung niederschlägt. Folglich wird der nachgeschalteten Turbine ein Fluid mit einer höheren Enthalpie zugeführt. Indem die Verlustwärme des Generators von dem Fluid aufgenommen wird, kann sie an der Turbine zur Erzeugung mechanischer Energie nutzbar gemacht werden. Dadurch kann ein insgesamt höherer Wirkungsgrad beim Betrieb des Turbosatzes erreicht werden.

Das Fluid ist gasförmig. Das Fluid ist ein Dampf, insbesondere Nassdampf oder Sattdampf. Handelt es sich bei dem Fluid um Heißdampf (überhitzter Dampf) wird durch die Enthalpieerhöhung die Dampftemperatur gesteigert. Handelt es sich bei dem Fluid um Sattdampf wird durch die Enthalpieerhöhung die Dampftemperatur gesteigert und der Dampf geringfügig überhitzt. Handelt es sich bei dem Fluid um Nassdampf wird durch die Enthalpieerhöhung der Dampfgehalt erhöht bzw. die Dampfnässe reduziert (Dampftrocknung). Durch die im Nassdampf enthaltenen flüssigen Bestandteile (Nebel bzw. Tröpfchen) ist das Kühlvermögen von Nassdampf besonders hoch. Die flüssigen Bestandteile können durch Verdampfen (Phasenwechsel) eine große spezifische Wärmemenge (Verdampfungsenthalpie) aufnehmen. Die Enthalpieerhöhung des Dampfes vor dem Eintritt in die Turbine führt zu einer geringfügig höheren Abdampfenthalpie hinter der Turbine. Endet die Expansion in der Turbine bereits unterhalb der Sattdampflinie im sogenannten Nassdampfgebiet führt die höhere Abdampfenthalpie bei sonst gleichem Druck zu einem höheren Dampfgehalt des Abdampfes. Die sog. Endnässe wird geringfügig reduziert. Dadurch können negative Effekte wie zum Beispiel Tropfenschlagerosion oder Schleppverluste reduziert werden.

Ein Druck in der Zuleitung und in der Turbine liegt unter dem Umgebungsdruck, insbesondere bei 0,3 bis 0,7 bar. Dies erhöht die inhärente Sicherheit des Betriebsverfahrens. Ein Austritt des Fluids in die Umgebung ist nicht möglich. Im Falle eines mechanischen Schadens an einem Leitungssystem des Turbosatzes kann allenfalls Umgebungsluft in dieses einströmen. Dadurch kann der Turbosatz einfacher aufgebaut werden. Insbesondere kann auf Sicherheitseinrichtungen wie beispielsweise Schnellschlussklappen oder Schnellschlussventile verzichtet werden. Der Druck liegt bei dieser Verfahrensvariante grundsätzlich überall in der Zuleitung und stromaufwärts eines Turbinenrades der Turbine unter dem Umgebungsdruck und vorzugsweise in dem genannten Wertebereich von 0,3 bis 0,7 bar. Nach dem Entspannen des Fluids in der Turbine liegt der Druck vorzugsweise bei 0,05 bis 0,2 bar.

Die erfindungsgemäßen Betriebsverfahren werden vorzugsweise an einer unten beschriebenen erfindungsgemäßen Niederdruckdampfturbinenanlage durchgeführt.

Vorzugsweise umfasst das Betriebsverfahren die weiteren Schritte
a) Verdampfen eines flüssigen Wärmeträgermediums, sodass dampfförmiges Fluid erhalten wird, und
e) Kondensieren des dampfförmigen Fluids nachdem es die Turbine durchströmt hat, sodass flüssiges Wärmeträgermedium erhalten wird.

Das durch Verdampfen im Schritt a) erhaltene Fluid wird im Schritt b) in die Zuleitung eingeleitet. Das im Schritt e) kondensierte, flüssige Wärmeträgermedium kann nach Wärmezufuhr einer erneuten Verdampfung gemäß Schritt a) zugeführt werden. Auf diese Weise kann ein Kreisprozess eingerichtet werden. Zur Wärmezufuhr kann das Wärmeträgermedium durch einen Wärmespeicher und/oder eine Heizvorrichtung, beispielsweise einen solarthermischen Wärmeerzeuger, geleitet werden. Das flüssige Wärmeträgermedium ist derselbe Stoff wie das Fluid; dieser Stoff liegt als Wärmeträgermedium im flüssigen Aggregatzustand vor und als Fluid dampfförmig, d.h. im gasförmigen Aggregatzustand.

Eine Temperatur des in die Zuleitung eingeleiteten Fluids kann höchstens 110°C, bevorzugt höchstens 100°C, besonders bevorzugt höchstens 90°C, betragen. Dadurch wird eine besonders effektive Kühlung des Generators erreicht. Insbesondere kann ein Generator mit einer zulässigen Betriebstemperatur von beispielsweise 130°C mit einer Temperaturdifferenz von 20 K wirksam gekühlt und vor Überhitzen geschützt werden. Ein Fluid mit einer solchen Temperatur kann vorzugsweise durch Entspannungsverdampfen bereitgestellt werden. Insbesondere kann das Fluid in einem Entspannungsverdampfer verdampftes Wasser sein, das vorzugsweise vor dem Entspannungsverdampfen vorgewärmt wurde, beispielsweise auf 80°C bis 105°C, vorzugsweise auf 90°C bis 95°C.

Stromaufwärts des Generators kann eine Flüssigkeit in die Zuleitung eingespritzt werden. Die Flüssigkeit wird dabei zusätzlich zu dem Fluid in die Zuleitung eingespritzt. Das Einspritzen erfolgt zumindest zeitweise während der Durchführung des Betriebsverfahrens. Es kann jedoch auch durchgängig (kontinuierlich) eingespritzt werden. Die Flüssigkeit ist vorzugsweise derselbe Stoff (z.B. Wasser) wie das Fluid. Das Fluid liegt jedoch typischerweise gasförmig vor. Durch das Einspritzen der Flüssigkeit kann die Temperatur des Fluids reduziert werden. Wenn das Fluid ein Dampf ist, kann die Temperatur bis zur Sattdampftemperatur reduziert werden. Darüber hinaus wird der Dampfgehalt reduziert bzw. die Nässe erhöht. Die flüssigen Bestandteile sorgen in der Dampfströmung beim Verdampfen für eine größere Kühlleistung. Diese Maßnahme für zu einem Rückgang der Wicklungstemperaturen.

*Turbosätze für erfindungsgemäße Niederdruckdampfturbinenanlagen* Eine erfindungsgemäße Niederdruckdampfturbinenaniage nach Anspruch 8 weist eine Turbine, die als Axialturbine ausgebildet ist, und einen Generator auf. Der Generator ist innerhalb einer Zuleitung zu der Turbine angeordnet. Die Turbine ist für eine Anströmung aus Richtung des Generators ausgebildet. Der Generator ist mithin stromaufwärts der Turbine angeordnet. Eine Strömung eines Fluids verläuft im Betrieb des Turbosatzes von dem Generator zu der Turbine. Das Fluid strömt im Betrieb zunächst an dem Generator vorbei und sodann durch die Turbine. Dadurch wird eine inhärente Kühlung des Generators ohne zusätzlichen Energieaufwand erreicht. Wenn die Turbine von dem Fluid angetrieben wird, strömt das Fluid zunächst an dem Generator vorbei. Dabei nimmt das Fluid Wärmeenergie von dem Generator auf. Dadurch wird der Generator gekühlt und die Enthalpie des Fluids wird erhöht. Diese Enthalpieerhöhung des Fluids kann beim Durchtritt durch die Turbine zur Erzeugung (zusätzlicher) mechanischer Energie genutzt werden.

Der Generator besitzt vorzugsweise eine Nennleistung von wenigstens 50 kW. Typischerweise besitzt der Generator eine Nennleistung von höchstens 500 kW, bevorzugt höchstens 300 kW, besonders bevorzugt höchstens 200 kW, ganz besonders bevorzugt höchstens 100 kW.

Eine Axialturbine ist grundsätzlich nur für eine Anströmung aus einer Richtung geeignet. Sie kann für ihren Betrieb nicht je nach Bedarf aus beiden axialen Richtungen angeströmt werden. Eine Axialturbine erlaubt einen großen Volumenstrom von Fluid bei niedrigen Drücken.

Die Turbine ist als Dampfturbine, nämlich als Niederdruckdampfturbine, ausgebildet. Die Dampfturbine kann ein- oder mehrstufig ausgeführt sein. Eine Beschaufelung der Turbine kann im Impuls- oder, vorzugsweise, im Reaktionsdesign ausgeführt sein. Unter einer Niederdruckdampfturbine wird im Rahmen der vorliegenden Erfindung eine Dampfturbine verstanden, die bei einem Eintrittsdruck und einem Austrittsdruck des Dampfes (Fluids) von jeweils weniger als 1 bar arbeitet. Mit anderen Worten liegt bei einer Niederdruckdampfturbine ein dampfseitiger Systemdruck im Betrieb unterhalb von 1 bar, d.h. unterhalb des Umgebungsdrucks.

Die Turbosätze werden vorzugsweise mit einem oben beschriebenen, erfindungsgemäßen Betriebsverfahren betrieben.

Vorzugsweise sind ein Turbinenrad der Turbine und ein Rotor des Generators um eine gemeinsame Längsachse drehbar. Dies erlaubt einen vereinfachten Aufbau des Turbosatzes. Der Rotor des Generators und das Turbinenrad der Turbine können auf derselben oder auf separaten Wellen angeordnet sein. Der Rotor und das Turbinenrad können direkt miteinander gekuppelt sein, oder durch ein Getriebe miteinander verbunden werden. Vorzugsweise sind das Turbinenrad und der Rotor auf einer gemeinsamen Welle angeordnet. Dies vereinfacht den Aufbau des Turbosatzes weiter und erlaubt einen besonders kompakten Bau. Der Turbosatz kann eine erste Lagerstelle für die Welle zwischen dem Rotor und dem Turbinenrad aufweisen und eine zweite Lagerstelle für die Welle jenseits des Rotors aufweisen. Vorzugsweise ist keine weitere Lagerstelle vorgesehen. Das Turbinenrad ist dann fliegend gelagert. Alternativ dazu kann auch das Turbinenrad zwischen zwei Lagerstellen der Welle angeordnet sein. Insbesondere können Rotor und Turbinenrad zwischen genau zwei Lagerstellen der Welle angeordnet sein.

Vorzugsweise ist ein Leitrad der Turbine zwischen dem Generator und einem Turbinenrad der Turbine angeordnet. Durch das Leitrad kann das strömende Fluid beschleunigt und umgelenkt werden, sodass es drallbehaftet auf das Turbinenrad trifft. Dadurch kann die Arbeitsumsetzung des Turbosatzes verbessert werden.

Ein Stator des Generators kann in einem Innengehäuse angeordnet sein. Das Innengehäuse ist innerhalb der Zuleitung angeordnet. Das Innengehäuse umgibt den Stator in Umfangsrichtung, insbesondere ringförmig. Das Innengehäuse ist vorzugsweise an der Zuleitung abgestützt. Typischerweise ist auch der Rotor innerhalb des Innengehäuses angeordnet, insbesondere innerhalb des Stators. Zwischen dem Innengehäuse und einer Wandung der Zuleitung ist vorteilhaft ein ringförmiger Strömungskanal ausgebildet. Das Fluid kann in dem Strömungskanal um das Innengehäuse herum strömen. Vorzugsweise weist das Innengehäuse außenseitig Kühlrippen auf. Dadurch kann eine verbesserte Wärmeübertragung auf das strömende Fluid und eine stärkere Kühlung des Generators erreicht werden. Der Stator umfasst typischerweise ein Blechpaket und Wicklungen.

Der Generator, ggf. mit Innengehäuse, und die Turbine können in einem gemeinsamen Außengehäuse angeordnet sein. Alternativ können der Generator, ggf. mit Innengehäuse, und die Turbine jeweils in separaten Außengehäusen angeordnet sein.

Stromaufwärts des Generators kann eine Einspritzvorrichtung für flüssiges Wärmeträgermedium an der Zuleitung angeordnet sein. Die Einspritzvorrichtung ist mit anderen Worten von der Turbine aus gesehen jenseits des Generators an der Zuleitung angeordnet. Dies erlaubt eine noch stärkere Kühlung des Generators. Zudem können die weiteren Vorteile des Betriebsverfahrens mit Flüssigkeitseinspritzung an dem Turbosatz nutzbar gemacht werden.

### Erfindungsgemäße Niederdruckdampfturbinenanlagen

In den Rahmen der vorliegenden Erfindung fällt weiterhin eine Niederdruckdampfturbinenanlage aufweisend
- einen zuvor beschriebenen Turbosatz,
- einen Entspannungsverdampfer, zum Verdampfen von flüssigem Wärmeträgermedium, sodass dampfförmiges Fluid erhalten wird, wobei der Druck in dem Entspannungsverdampfer unter dem Umgebungsdruck liegt. Durch den Entspannungsverdampfer wird das Fluid bei einem Druck unterhalb des Umgebungsdrucks bereitgestellt. Die Niederdruckdampfturbinenanlage ist mithin inhärent sicher, da ein Austritt des Fluids in die Umgebung nicht möglich ist. Im Falle eines mechanischen Schadens an einem Leitungssystem der Niederdruckdampfturbinenanlage kann allenfalls Umgebungsluft in diese einströmen. Dadurch kann die Niederdruckdampfturbinenanlage einfacher aufgebaut werden. Insbesondere kann auf Sicherheitseinrichtungen wie beispielsweise Schnellschlussklappen oder Schnellschlussventile verzichtet werden.

Die erfindungsgemäßen Niederdruckdampfturbinenanlagen werden vorzugsweise mit einem oben beschriebenen, erfindungsgemäßen Betriebsverfahren betrieben.

Die Niederdruckdampfturbinenanlage kann weiterhin einen Kondensator aufweisen, zum Kondensieren des im Betrieb aus der Turbine austretenden dampfförmigen Fluids, sodass flüssiges Wärmeträgermedium erhalten wird, wobei der Druck in dem Kondensator unter dem Umgebungsdruck liegt. Bevorzugt weist die Niederdruckdampfturbinenanlage weiterhin eine Rückführeinrichtung auf, um flüssiges Wärmeträgermedium aus dem Kondensator in den Entspannungsverdampfer zurückzuführen, nachdem es wieder erwärmt wurde. Dadurch kann ein Kreisprozess eingerichtet werden. Die Rückführeinrichtung weist typischerweise eine Kondensatpumpe auf, die das kondensierte Wärmeträgermedium in einen Wärmespeicher und/oder eine Heizvorrichtung, z.B. einen solarthermischen Wärmeerzeuger fördert. Von dort wird das Wärmeträgermedium wieder in den Entspannungsverdampfer gefördert, beispielsweise mittels einer Vorlaufpumpe.

Die Niederdruckdampfturbinenanlage kann weiterhin Folgendes aufweisen:
- einen Vakuumbrecher, der stromabwärts eines Turbinenrades der Turbine angeordnet ist,
- eine Leistungselektronik zum Anschließen des Generators an einen Verbraucher, und
- eine Steuereinheit, die dazu eingerichtet ist, die elektrische Belastung des Generators durch die Leistungselektronik zu verändern und den Vakuumbrecher zu öffnen.

Der Vakuumbrecher erlaubt insbesondere ein Schnellabschalten der Niederdruckdampfturbinenanlage, indem er im geöffneten Zustand Luft aus der Umgebung stromabwärts des Turbinenrades in die Niederdruckdampfturbinenanlage einströmen lässt. Dadurch kommt der Prozess zum Erliegen. Auf weitere Regel- oder Sicherheitsorgane kann verzichtet werden.

Die Steuereinheit erlaubt ein Anpassen der Niederdruckdampfturbinenanlage an unterschiedliche Betriebsparameter, wie beispielsweise Temperaturen und/oder Drücke des Fluids. Insbesondere kann durch Verändern der Belastung des Generators eine Drehzahl der Turbine an die aktuellen Betriebsparameter der Niederdruckdampfturbinenanlage angepasst werden. Dadurch kann der Betriebsbereich der Niederdruckdampfturbinenanlage erweitert werden.

Für weitere Merkmale der Niederdruckdampfturbinenanlage und eines zugehörigen Betriebsverfahrens wird auf die nachfolgende Beschreibung Bezug genommen. Insbesondere können Merkmale der nachfolgend beschriebenen Niederdruckdampfturbinenanlage bei der oben beschriebenen Niederdruckdampfturbinenanlage zusätzlich vorgesehen sein. Das oben beschriebene Betriebsverfahren für einen Turbosatz kann um Merkmale eines Betriebsverfahren gemäß der nachfolgenden Beschreibung zu einem Betriebsverfahren für eine Niederdruckdampfturbinenanlage erweitert werden. Die Vorteile der Niederdruckdampfturbinenanlage und des zugehörigen Betriebsverfahrens gemäß der nachfolgenden Beschreibung können somit hier nutzbar gemacht werden.

### Weitere Niederdruckdampfturbinenanlagen

Unter einer Niederdruckdampfturbinenanlage wird eine Dampfturbinenanlage verstanden, bei der ein dampfseitiger Systemdruck im Betrieb unterhalb des Umgebungsdrucks, d.h. unterhalb von 1 bar, liegt. Die weitere Niederdruckdampfturbinenanlage weist einen Entspannungsverdampfer auf. Der Entspannungsverdampfer dient zum Verdampfen von flüssigem Wärmeträgermedium, sodass dampfförmiges Fluid erhalten wird, wobei der Druck in dem Entspannungsverdampfer unter dem Umgebungsdruck liegt. Im Betrieb der Niederdruckdampfturbinenanlage liegt der Druck im Entspannungsverdampfer unter dem Umgebungsdruck, d.h. unterhalb von 1 bar. Durch das Absenken des Drucks kann flüssiges Wärmeträgermedium, z.B. Wasser, bei einer niedrigeren Temperatur verdampft werden als bei Umgebungsdruck. Dadurch wird ein Einsatzbereich für vergleichsweise geringe Heizleistungen, etwa im Bereich der Solarthermie oder der Nutzung von Abwärme aus industriellen Prozessen erschlossen. Das flüssige Wärmeträgermedium ist derselbe Stoff wie das dampfförmige Fluid; dieser Stoff liegt als Wärmeträgermedium im flüssigen Aggregatzustand vor und als Fluid dampfförmig, d.h. im gasförmigen Aggregatzustand.

Die weitere Niederdruckdampfturbinenanlage weist ferner eine Dampfturbine auf. Eine Zuleitung der Niederdruckdampfturbinenanlage verbindet den Entspannungsverdampfer fluidisch mit der Dampfturbine. Das im Entspannungsverdampfer erzeugte dampfförmige Fluid kann über die Zuleitung der Dampfturbine zugeführt werden. Die Dampfturbine wandelt thermische Energie des Dampfes (dampfförmigen Fluids) in mechanische Energie um. Weiter weist die Niederdruckdampfturbinenanlage einen Generator auf, der mit der Dampfturbine gekoppelt ist. Der Generator wandelt von der Dampfturbine bereitgestellte mechanische Energie in elektrische Energie um. Die Niederdruckdampfturbinenanlage weist ferner eine Leistungselektronik auf. Die Leistungselektronik dient zum Anschließen des Generators an einen Verbraucher und/oder ein Stromnetz.

Weiterhin weist die weitere Niederdruckdampfturbinenanlage einen Kondensator auf. Der Kondensator dient zum Kondensieren des im Betrieb aus der Dampfturbine austretenden dampfförmigen Fluids, sodass flüssiges Wärmeträgermedium erhalten wird, wobei der Druck in dem Kondensator unter dem Umgebungsdruck liegt. Das in der Dampfturbine entspannte Fluid wird im Betrieb der Niederdruckdampfturbinenanlage bei einem Druck, der noch unterhalb des Drucks im Entspannungsverdampfer liegt, kondensiert. Eine Ableitung der Niederdruckdampfturbinenanlage verbindet die Dampfturbine fluidisch mit dem Kondensator.

Die weitere Niederdruckdampfturbinenanlage weist einen Vakuumbrecher auf, der stromabwärts eines Turbinenrades der Dampfturbine angeordnet ist. Der Vakuumbrecher kann am Kondensator oder an der Ableitung oder an der Dampfturbine stromabwärts des Turbinenrads angeordnet sein. Im geöffneten Zustand des Vakuumbrechers kann stromabwärts des Turbinenrades Umgebungsluft in die Niederdruckdampfturbinenanlage einströmen. Die Dampfturbine kann dadurch abgebremst oder angehalten werden.

Schließlich weist die weitere Niederdruckdampfturbinenanlage eine Steuereinheit auf, die dazu eingerichtet ist, die elektrische Belastung des Generators durch die Leistungselektronik zu verändern und den Vakuumbrecher zu öffnen. Die Leistungselektronik umfasst vorzugsweise einen Einspeiseumrichter, d.h. eine Kombination aus Gleich- und Wechselrichter. Das Verändern der Belastung des Generators erlaubt die Anpassung der Niederdruckdampfturbinenanlage an unterschiedliche Betriebszustände. Insbesondere kann die Steuereinheit, dazu eingerichtet sein, die Belastung so einzustellen, dass die Drehzahl der Dampfturbine einen Sollwert für den vorliegenden Betriebszustand annimmt. Auf diese Weise kann der Bereich von Betriebszuständen, innerhalb dem die Niederdruckdampfturbinenanlage effizient, d.h. insbesondere mit einem großen Wirkungsgrad der Dampfturbine, betrieben werden kann, erweitert werden. Der Betriebszustand kann insbesondere eine oder mehrere der Größen Druck in der Zuleitung, Druck in der Ableitung, Temperatur des dampfförmigen Fluids in der Zuleitung und/oder in dem Entspannungsverdampfer, Temperatur des dampfförmigen Fluids in der Ableitung und/oder in dem Kondensator umfassen. Alternativ oder zusätzlich kann der Betriebszustand die Größen Enthalpie des Fluids in der Zuleitung und/oder Enthalpie des Fluids in der Ableitung umfassen.

Da der dampfseitige Systemdruck stets unterhalb des Umgebungsdrucks liegt, ist die weitere Niederdruckdampfturbinenanlage inhärent sicher. Ein Austritt von dampfförmigem Fluid ist aufgrund des Unterdrucks relativ zur Umgebung nicht möglich. Daher kann auf den Einsatz von Sicherheitsorganen vor oder an der Dampfturbine vollständig verzichtet werden. Zusätzlich erlaubt die Steuereinrichtung einen Betrieb in sog. wärmegeführter Gleitdruckfahrweise, d.h. der Druck stromaufwärts des Turbinenrades der Dampfturbine ist variabel. Durch die veränderliche Belastung des Generators in Verbindung mit der variablen Drehzahl der Dampfturbine kann vollständig auf Regelorgane vor oder an der Dampfturbine verzichtet werden. Die Niederdruckdampfturbinenanlage weist vorzugsweise stromaufwärts des Turbinenrades keine Organe zur Beeinflussung eines Volumenstroms oder Massenstroms des Dampfs auf. Dadurch kann die Niederdruckdampfturbinenanlage besonders einfach aufgebaut sein. Insbesondere weist die Niederdruckdampfturbinenanlage keine Schnellschlussklappen oder Schnellschlussventile und keine Regelklappen oder Regelventile auf. Druckverluste vor der Dampfturbine werden durch den Verzicht auf Sicherheits- und Regelorgane auf ein Minimum reduziert, was sich positiv auf den Anlagenwirkungsgrad auswirkt.

Die weitere Niederdruckdampfturbinenanlage wird vorzugsweise mit einem unten beschriebenen Betriebsverfahren betrieben. Die Steuereinheit ist vorzugsweise dazu ausgebildet, die entsprechenden Verfahrensschritte durchzuführen und/oder das Betriebsverfahren entsprechend zu steuern.

Vorzugsweise sind das Turbinenrad der Dampfturbine und ein Rotor des Generators auf einer gemeinsamen Welle angeordnet. Dies erlaubt einen kompakten und einfachen Aufbau der Niederdruckdampfturbinenanlage. Die Niederdruckdampfturbinenanlage kann eine erste Lagerstelle für die Welle zwischen dem Rotor und dem Turbinenrad und eine zweite Lagerstelle für die Welle jenseits des Rotors aufweisen. Vorzugsweise ist keine weitere Lagerstelle vorgesehen. Das Turbinenrad ist mithin fliegend gelagert.

Die Niederdruckdampfturbinenanlage kann weiterhin eine Evakuierungseinrichtung (Evakuierungsanlage) aufweisen. Mittels der Evakuierungseinrichtung kann ein Druck in dem Entspannungsverdampfer, der Dampfturbine, dem Kondensator, der Zuleitung und der Ableitung unter den Umgebungsdruck gesenkt werden. Insbesondere kann der Druck im Entspannungsverdampfer unter den Siededruck des flüssigen Wärmeträgermediums gesenkt werden. Dadurch kann die Niederdruckdampfturbinenanlage angefahren werden. Vorzugsweise weist die Evakuierungseinrichtung eine Vakuumpumpe auf. Besonders bevorzugt ist die Evakuierungseinrichtung am Kondensator angeordnet.

Vorzugsweise weist die Niederdruckdampfturbinenanlage weiterhin einen Bremswiderstand auf. Die Steuereinheit ist typischerweise dazu eingerichtet, elektrische Energie aus dem Generator in dem Bremswiderstand in Wärme umzuwandeln, wenn ein Betriebszustand der Niederdruckdampfturbinenanlage außerhalb eines zulässigen Bereichs liegt. Die Steuereinheit kann insbesondere dazu eingerichtet sein, im Falle einer Notabschaltung oder wenn die maximal zulässige Systemleistung erreicht ist, elektrische Energie aus dem Generator in den Bremswiderstand zu leiten. Vorzugsweise wird die so erzeugte Wärme zurück in einen Wärmespeicher eingebracht.

Die Niederdruckdampfturbinenanlage kann weiterhin eine Vorlaufpumpe aufweisen, um flüssiges Wärmeträgermedium in den Entspannungsverdampfer zu fördern, wobei die Steuereinheit dazu ausgebildet ist, eine Förderleistung der Vorlaufpumpe zu verändern. Durch Variieren der Förderleistung kann die thermische Energie, die der Dampfturbine zur Verfügung steht, bzw. die in der Dampfturbine umsetzbare Leistung, verändert werden. Auch auf diese Weise kann die Drehzahl der Dampfturbine verändert werden. Zum Abschalten der Niederdruckdampfturbinenanlage kann die Vorlaufpumpe ausgeschaltet werden. Die Förderleistung kann ein Volumenstrom sein.

Besonders bevorzugt ist vorgesehen, dass in der Steuereinheit ein Kennfeld hinterlegt ist, welches einen Betriebszustand der Niederdruckdampfturbinenanlage mit einem Sollwert einer Drehzahl der Dampfturbine verknüpft. Der Betriebszustand kann eine oder mehrere der Größen Druck in der Zuleitung, Druck in der Ableitung, Temperatur des dampfförmigen Fluids in der Zuleitung und/oder in dem Entspannungsverdampfer, Temperatur des dampfförmigen Fluids in der Ableitung und/oder in dem Kondensator umfassen. Alternativ oder zusätzlich kann der Betriebszustand die Größen Enthalpie des Fluids in der Zuleitung und/oder Enthalpie des Fluids in der Ableitung umfassen. Die Steuereinheit ist typischerweise dazu eingerichtet, die Drehzahl der Dampfturbine auf den Sollwert zu regeln. Dazu kann die Steuereinheit die Belastung des Generators variieren, elektrische Energie in einen Bremswiderstand leiten und/oder den Vakuumbrecher zeitweise öffnen. Durch die im Kennfeld hinterlegten Sollwerte kann ein möglichst großer Wirkungsgrad der Niederdruckdampfturbinenanlage, insbesondere der Dampfturbine, für einen breiten Bereich von Betriebszuständen erreicht werden.

Die Niederdruckdampfturbinenanlage kann weiterhin eine Rückführeinrichtung aufweisen, um flüssiges Wärmeträgermedium aus dem Kondensator in den Entspannungsverdampfer zurückzuführen. Dadurch kann ein Kreisprozess eingerichtet werden. Die Rückführeinrichtung weist typischerweise eine Kondensatpumpe auf, die das kondensierte Wärmeträgermedium in einen Wärmespeicher und/oder eine Heizvorrichtung, z.B. einen solarthermischen Wärmeerzeuger fördert. Von dort wird das Wärmeträgermedium wieder in den Entspannungsverdampfer gefördert, beispielsweise mittels einer Vorlaufpumpe.

Besonders bevorzugt ist vorgesehen, dass der Generator stromaufwärts der Dampfturbine innerhalb der Zuleitung angeordnet ist. Der Generator wird dann durch den die Dampfturbine antreibenden Dampf automatisch und ohne zusätzliche Einrichtungen gekühlt.

Vorzugsweise ist ein Stator des Generators in einem Innengehäuse angeordnet. Das Innengehäuse ist vorzugsweise innerhalb der Zuleitung angeordnet. Das Innengehäuse umgibt den Stator in Umfangsrichtung, insbesondere ringförmig. Das Innengehäuse ist vorzugsweise an der Zuleitung abgestützt. Typischerweise ist auch der Rotor innerhalb des Innengehäuses angeordnet, insbesondere innerhalb des Stators. Das Innengehäuse kann außenseitig Kühlrippen aufweisen. Dadurch kann eine verbesserte Wärmeübertragung auf das strömende Fluid und eine stärkere Kühlung des Generators erreicht werden.

Die Niederdruckdampfturbinenanlage weist vorzugsweise weiterhin einen Wärmespeicher und/oder einen solarthermischen Wärmeerzeuger auf. Dies ermöglicht die Bereitstellung von vorgewärmtem Wärmeträgermedium. Dadurch wird die thermische Energie des verdampften Wärmeträgermediums, d.h. des dampfförmigen Fluids erhöht.

### Betriebsverfahren für eine Niederdruckdampfturbinenanlage

Nachfolgend ist ein Betriebsverfahren für eine Niederdruckdampfturbinenanlage beschrieben. Die Niederdruckdampfturbinenanlage weist Folgendes auf:
- einen Entspannungsverdampfer,
- eine Dampfturbine,
- einen Kondensator,
- einen Generator, der von der Dampfturbine angetrieben wird,
- ein Leitungssystem, das den Entspannungsverdampfer über eine Zuleitung, die Dampfturbine und eine Ableitung mit dem Kondensator verbindet, und
- einen Vakuumbrecher, der stromabwärts eines Turbinenrades der Dampfturbine angeordnet ist.

Das Betriebsverfahren weist die folgenden Schritte auf:
a) Evakuieren des Leitungssystems, sodass der Druck in dem Leitungssystem überall unter dem Umgebungsdruck liegt und sodass Wärmeträgermedium in dem Entspannungsverdampfer verdampft,
b) Verändern der elektrischen Belastung des Generators,
c) Öffnen des Vakuumbrechers.

Die Schritte b) und c) können gleichzeitig oder in beliebiger Reihenfolge nacheinander durchgeführt werden.

Mit Hilfe von Schritt a) kann die Niederdruckdampfturbinenanlage in Betrieb gesetzt werden. Zum Anfahren der Niederdruckdampfturbinenanlage wird der innere Systemdruck, vorzugsweise über eine Evakuierungseinrichtung, unter den Umgebungsdruck abgesenkt. Nicht kondensierbare Stoffe, wie zum Beispiel Gase (Luft), werden so aus dem System entfernt. Der Systemdruck wird soweit abgesenkt, bis das Wärmeträgermedium entsprechend seiner Temperatur den Dampfdruck erreicht, zu sieden beginnt und im Entspannungsverdampfer Sattdampf entsteht.

Mit den Schritten b) und c) kann der Betrieb der Niederdruckdampfturbinenanlage gesteuert und/oder beendet werden.

Im Schritt b) kann die Drehzahl der Dampfturbine und des mit ihr gekuppelten Generators an das zur Verfügung stehende isentrope Enthalpiegefälle angepasst werden. Die Anpassung der Drehzahl erfolgt durch Belasten bzw. Entlasten des Generators über die Leistungselektronik, die dem Generator stromseitig nachgeschaltet ist. Dadurch kann die Drehzahl veränderlichen Randbedingungen (Betriebszuständen), wie sie z.B. durch einen Temperaturrückgang in einem Wärmespeicher, durch den Tagesgang der Sonneneinstrahlung und/oder durch eine Druckänderung im Kondensator verursacht werden, angepasst werden.

Der Vakuumbrecher ist typischerweise das einzige mechanische Sicherheitsorgan der Niederdruckdampfturbinenanlage. Sollte die Belastung des Generators nicht weiter gesteigert werden können, beispielsweise weil der Regelbereich einer Leistungselektronik ausgeschöpft ist, und die Drehzahl weiter steigen oder eine maximal zulässige Systemleistung erreicht sein, wird im Schritt c) der Vakuumbrecher geöffnet. Dadurch strömt Umgebungsluft in das Leitungssystem der Niederdruckdampfturbinenanlage ein. Die eingeströmte Luft kann im Kondensator nicht kondensiert werden. Dadurch steigt der Druck stromabwärts des Turbinenrades und das der Dampfturbine zur Verfügung stehende isentrope Enthalpiegefälle wird kleiner. Dadurch sinkt die Drehzahl der Dampfturbine und des mit ihr gekuppelten Generators, bis der gesamte Prozess zum Erliegen kommt. Durch kurzzeitiges Öffnen des Vakuumbrechers kann das isentrope Enthalpiegefälle dosiert abgesenkt werden, sodass die Drehzahl der Dampfturbine gesenkt wird, der Prozess aber nicht zum Erliegen kommt, sondern mit verringerter Leistung weiterläuft.

Das Betriebsverfahren wird vorzugsweise an einer oben beschriebenen, weiteren Niederdruckdampfturbinenanlage durchgeführt.

Das Betriebsverfahren kann den weiteren Schritt d) aufweisen:
d) Verändern einer Verdampfungsrate in dem Entspannungsverdampfer, insbesondere durch Verändern eines Volumenstroms von in den Entspannungsverdampfer fließendem flüssigem Wärmeträgermedium. Dadurch kann auf die thermische Energie und/oder den Massenstrom des verdampften Wärmeträgermediums/Fluids eingewirkt werden. Dies erlaubt es, die Leistung der Dampfturbine zu beeinflussen. Zum Verändern der Verdampfungsrate kann eine Förderleistung einer Vorlaufpumpe, die flüssiges Wärmeträgermedium in den Entspannungsverdampfer fördert, verändert werden. Der Schritt d) kann gleichzeitig mit oder in beliebiger Folge vor oder nach den Schritten b) und c) durchgeführt werden. Die Schritte b), c) und/oder d) können wiederholt durchgeführt werden.

Vorzugsweise wird im Rahmen des Betriebsverfahrens die Drehzahl der Dampfturbine verändert. Hierzu dienen die Schritte b), c) und/oder d). Vorzugsweise wird die Drehzahl der Dampfturbine in Abhängigkeit von einem Betriebszustand der Niederdruckdampfturbinenanlage verändert. Dies erlaubt es, die Niederdruckdampfturbinenanlage in einem breiten Bereich von Betriebszuständen effizient, d.h. insbesondere mit einem großen Wirkungsgrad der Dampfturbine, zu betreiben. Der Betriebszustand kann eine oder mehrere der Größen Druck in der Zuleitung, Druck in der Ableitung, Temperatur des dampfförmigen Fluids in der Zuleitung und/oder in dem Entspannungsverdampfer, Temperatur des dampfförmigen Fluids in der Ableitung und/oder in dem Kondensator umfassen. Alternativ oder zusätzlich kann der Betriebszustand die Größen Enthalpie des Fluids in der Zuleitung und/oder Enthalpie des Fluids in der Ableitung umfassen. Dies erlaubt eine vom Betriebszustand abhängige Steuerung der Niederdruckdampfturbinenanlage. Besonders bevorzugt wird die Drehzahl der Dampfturbine auf einen Sollwert geregelt wird. Auf diese Weise kann der Wirkungsgrad der Niederdruckdampfturbinenanlage, insbesondere der Dampfturbine, für den jeweiligen Betriebszustand optimiert werden. Der Sollwert kann, insbesondere über ein Kennfeld, aus einem Betriebszustand der Niederdruckdampfturbinenanlage abgeleitet werden. Das Kennfeld kann in einer Steuereinheit der Niederdruckdampfturbinenanlage hinterlegt sein. Für unterschiedliche Betriebszustände sind im Allgemeinen unterschiedliche Sollwerte der Drehzahl hinterlegt. Derselbe Sollwert der Drehzahl kann einer - typischerweise kleinen - Anzahl von unterschiedlichen Betriebszuständen zugeordnet sein.

In dem Betriebsverfahren kann vorgesehen sein, dass gleichzeitig der Vakuumbrecher geöffnet wird, ein Volumenstrom von in den Entspannungsverdampfer fließendem flüssigem Wärmeträgermedium verringert wird, insbesondere auf null verringert wird, und elektrische Energie aus dem Generator in einem Bremswiderstand der Niederdruckdampfturbinenanlage in Wärme umgesetzt wird. Dadurch kann die Niederdruckdampfturbinenanlage besonders schnell abgeschaltete werden. Diese Variante des Betriebsverfahrens entspricht einer Schnellabschaltung oder Notabschaltung der Niederdruckdampfturbinenanlage.

Für weitere Merkmale der weiteren Niederdruckdampfturbinenanlage und des Betriebsverfahrens für eine Niederdruckdampfturbinenanlage wird auf die vorangehende Beschreibung Bezug genommen. Insbesondere können Merkmale des zuvor beschriebenen Turbosatzes und der zuvor beschriebenen Niederdruckdampfturbinenanlage bei der weiteren Niederdruckdampfturbinenanlage zusätzlich vorgesehen sein. Das hier beschriebene Betriebsverfahren für eine Niederdruckdampfturbinenanlage kann zusätzlich Merkmale eines Betriebsverfahrens für einen Turbosatz gemäß der vorangehenden Beschreibung aufweisen. Die Vorteile des Betriebsverfahrens, des Turbosatzes und der Niederdruckdampfturbinenanlage gemäß der vorangehenden Beschreibung können somit hier nutzbar gemacht werden.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: einen Turbosatz mit einer Turbine und einem Generator in einer symbolischen Darstellung, wobei die Richtung der Durchströmung beim Betrieb des Turbosatzes eingezeichnet ist;
- Fig. 2: einen Turbosatz mit einer Turbine und einem Generator und weiterhin mit einem Kondensator sowie einer Einspritzvorrichtung für flüssiges Wärmeträgermedium, in einer symbolischen Darstellung;
- Fig. 3: einen Turbosatz mit einer Turbine und einem Generator, wobei ein Turbinenrad der Turbine und ein Rotor des Generators auf derselben Welle angeordnet sind, in einem schematischen Längsschnitt;
- Fig. 4: eine Niederdruckdampfturbinenanlage mit einem Turbosatz umfassend eine Turbine und einen Generator sowie mit einem Entspannungsverdampfer und einem Kondensator, in einer symbolischen Darstellung;
- Fig. 5: ein Ablaufdiagramm eines Betriebsverfahrens für einen Turbosatz;
- Fig. 6: eine Niederdruckdampfturbinenanlage mit einem Entspannungsverdampfer, einer Dampfturbine, einem Generator und einem Kondensator, in einer symbolischen Darstellung;
- Fig. 7: eine Niederdruckdampfturbinenanlage wie in Fig. 6, weiterhin aufweisend einen solarthermischen Wärmeerzeuger, in einer symbolischen Darstellung;
- Fig. 8: eine Niederdruckdampfturbinenanlage wie in Fig. 6, weiterhin aufweisend einen Wärmespeicher, in einer symbolischen Darstellung;
- Fig. 9: eine Niederdruckdampfturbinenanlage wie in Fig. 8, weiterhin aufweisend einen solarthermischen Wärmeerzeuger, in einer symbolischen Darstellung;
- Fig. 10: eine Dampfturbine und einen Generator für eine Niederdruckdampfturbinenanlage, wobei der Generator stromaufwärts eines Turbinenrades der Dampfturbine in einer Zuleitung angeordnet ist, in einem schematischen Längsschnitt;
- Fig. 11: einen Ablaufplan eines Betriebsverfahrens für den Normalbetrieb einer Niederdruckdampfturbinenanlage;
- Fig. 12: einen Ablaufplan eines Betriebsverfahrens für eine Schnellabschaltung einer Niederdruckdampfturbinenanlage.

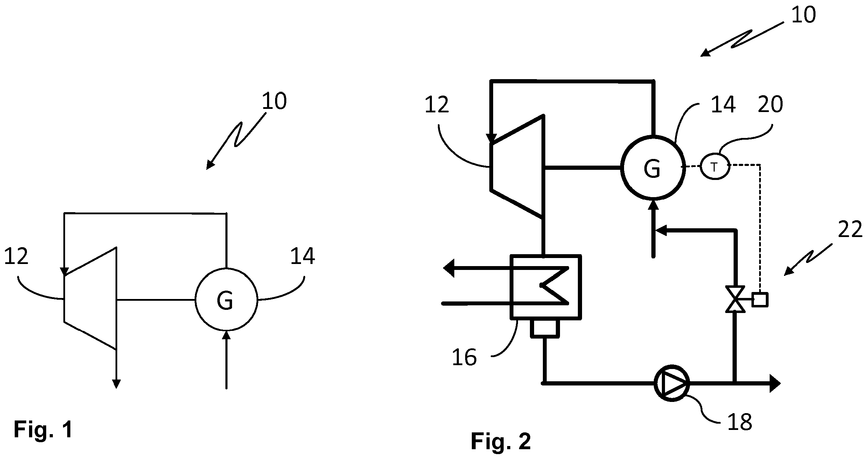

**Fig. 1** zeigt einen Turbosatz **10** in einer symbolischen Darstellung. Der Turbosatz 10 weist eine Turbine **12** und einen Generator **14** auf. Die Turbine 12 ist als eine Axialturbine ausgebildet. Der Generator 14 wird von der Turbine 12 angetrieben.

Im Betrieb des Turbosatzes 10 strömt Fluid, nämlich Dampf, zunächst an dem Generator 14 vorbei und sodann durch die Turbine 12. In der Turbine 12 wird thermische Energie des Fluids in mechanische Energie umgewandelt. Diese mechanische Energie wird im Generator 14 in elektrische Energie umgewandelt. Der Generator 14 ist innerhalb einer nicht näher dargestellten Zuleitung zu der Turbine 12 stromaufwärts von dieser angeordnet.

Die Strömungsrichtung des Fluids ist in Fig. 1 durch Pfeile angedeutet. Das Fluid, das die Turbine 12 antreibt, wird zuerst über den Generator 14 geleitet. Dort bewirkt das Fluid eine Wärmeabfuhr (Kühlung). Sodann wird das Fluid auf die Turbine 12 geleitet. Es sei angemerkt, dass der Verlauf der Strömung durch den Turbosatz 10 in Fig. 1 nur beispielhaft dargestellt ist. Vorzugsweise sind der Generator 14 und die Turbine 12 so ausgebildet und angeordnet, dass die Strömung zwischen dem Generator 14 und der Turbine 12 geradlinig verläuft.

**Fig. 2** zeigt einen Turbosatz 10 in einer symbolischen Darstellung. Der Turbosatz 10 gemäß Fig. 2 weist wie der Turbosatz von Fig. 1 eine Turbine 12, nämlich eine Axialturbine, und einen Generator 14 auf, der von der Turbine 12 angetrieben wird. Der Turbosatz 10 weist weiterhin einen Kondensator **16** auf. Der Kondensator 16 ist der Turbine 12 fluidisch nachgeschaltet. Dampfförmiges Fluid wird nach dem Durchtritt durch die Turbine 12 in dem Kondensator 16 abgekühlt, sodass es kondensiert. Im flüssigen Zustand wird das Fluid im Rahmen der Erfindung als flüssiges Wärmeträgermedium bezeichnet. Eine dem Kondensator 16 nachgeschaltete Kondensatpumpe **18** fördert das verflüssigte Fluid (flüssiges Wärmeträgermedium) zurück in einen nicht näher dargestellten Kreislauf. Das flüssige Wärmeträgermedium kann erneut verdampft und als (gasförmiges) Fluid dem Turbosatz 10 zugeführt werden.

Das Fluid wird über eine nicht näher dargestellte Zuleitung zunächst an dem Generator 14 vorbeigeleitet, wobei es den in der Zuleitung angeordneten Generator 14 umströmt, und dann der Turbine 12 zugeführt. Beim Vorbeiströmen an dem Generator 14 kühlt das Fluid den Generator 14. Zur Überwachung der Temperatur des Generators 14 ist ein Temperatursensor 20 vorgesehen. Typischerweise sind mehrere Temperatursensoren 20 vorgesehen, die vorzugsweise mit einem fehlertoleranten Überwachungsverfahren, beispielsweise 2003 (zwei von drei), überwacht werden.

Der Turbosatz 10 weist ferner eine Einspritzvorrichtung 22 für flüssiges Wärmeträgermedium auf. Die Einspritzvorrichtung 22 kann zumindest ein Regelventil, zumindest eine Rohrleitung sowie zumindest eine Einspritzdüse umfassen.

Wenn der Temperatursensor 20 feststellt, dass die Temperatur des Generators 14 einen zulässigen Wert überschritten hat, wird die Einspritzvorrichtung 22 aktiviert. Die Einspritzvorrichtung 22 spritzt dann Flüssigkeit stromaufwärts des Generators 14 in die Zuleitung ein. Die eingespritzte Flüssigkeit ist hier flüssiges Wärmeträgermedium, das aus dem Kondensator 16 abgezogen wurde. Durch die Wärme des Generators 14 verdampft die Flüssigkeit. Dadurch wird eine stärkere Kühlung des Generators 14 erreicht. Nach dem Verdampfen kann die zusätzliche thermische Energie in der Turbine 12 nutzbar gemacht werden.

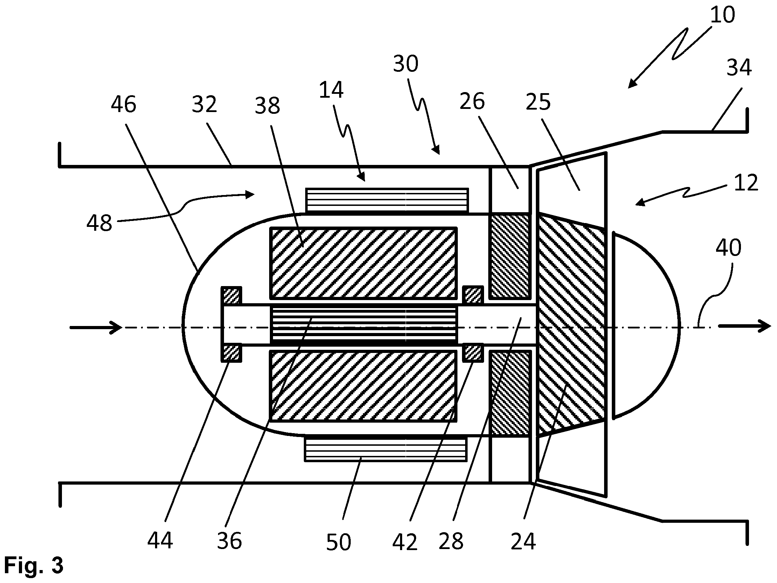

Fig. 3 zeigt einen Turbosatz 10 mit einer Turbine 12 und einem Generator 14 in einem schematischen Längsschnitt. Die Turbine 12 ist als eine Axialturbine ausgebildet. Die Turbine 12 weist ein Turbinenrad 24 und ein Leitrad 26 auf.

Das Leitrad 26 ist stromaufwärts des Turbinenrades 24 angeordnet, hier zwischen dem Turbinenrad 24 und dem Generator 14. Das Turbinenrad 24 ist mittels einer Welle **28** drehbar gelagert. Radial außen weist das Turbinenrad 24 eine Laufbeschaufelung **25** auf. Die Laufbeschaufelung 25 kann von dem Turbinenrad 24 separate Laufschaufeln umfassen, die an dem Turbinenrad 24 befestigt sind. Alternativ kann das Turbinenrad 24 einstückig ausgebildet sein, d.h. die Laufbeschaufelung 25 kann integraler Bestandteil des Turbinenrades 24 sein.

Ein Außengehäuse **30** des Turbosatzes 10 bildet stromaufwärts der Turbine 12 eine Zuleitung **32** mit aus. Stromabwärts der Turbine 12 bildet das Außengehäuse 30 eine Ableitung **34** mit aus. Über die Zuleitung 32 wird der Turbine 12 Fluid zugeführt. Über die Ableitung 34 wird entspanntes Fluid nach Durchtritt durch die Turbine 12 abgeführt.

Innerhalb der Zuleitung 32 ist der Generator 14 angeordnet. Der Generator 14 befindet sich mithin stromaufwärts der Turbine 12. Eine Richtung der Strömung durch den Turbosatz 10 ist in Fig. 3 durch Pfeile angedeutet. Die Strömung des Fluids verläuft hier geradlinig durch die Zuleitung 32 an dem Generator 14 vorbei und zu der Turbine 12 hin.

Der Generator 14 weist einen Rotor **36** und einen Stator **38** auf. Der Rotor 36 ist auf derselben Welle 28 wie das Turbinenrad 24 angeordnet. Mithin ist der Rotor 36 zusammen mit dem Turbinenrad 24 um eine gemeinsame Längsachse **40** drehbar. Die Welle 28, der Rotor 26 und das Turbinenrad 24 bilden einen Läufer des Turbosatzes 10. Das Leitrad 26 ist bezüglich der Längsachse 40 nicht drehbar. Das Leitrad kann an dem Außengehäuse 30 und/oder einem Innengehäuse **46** des Turbosatzes 10 undrehbar gehalten sein. Die Längsachse 40 kann für den Betrieb des Turbosatzes 10 horizontal, vertikal oder geneigt ausgerichtet sein.

Die Welle 28 ist in einer ersten Lagerstelle **42** und einer zweiten Lagerstelle **44** gelagert. Die erste Lagerstelle 42 befindet sich zwischen dem Rotor 36 und dem Turbinenrad 24. Die zweite Lagerstelle 44 befindet sich vom Turbinenrad 24 aus gesehen jenseits, d.h. stromaufwärts, des Rotors 36. Die Lagerstellen 42, 44 können in an und für sich bekannter Weise als Fest-/Loslageranordnung, schwimmende Stützlagerung oder angestellte Stützlagerung ausgeführt sein. Lager der Lageranordnungen 42, 44 können als Wälzlager, Gleitlager und/oder Magnetlager ausgebildet sein.

Der Stator 28 des Generators 14 ist in dem Innengehäuse 46 angeordnet. Das Innengehäuse 46 ist innerhalb der Zuleitung 32 angeordnet. Das Innengehäuse 46 kann sich über nicht näher dargestellte Stützen an dem Außengehäuse 30 abstützen. Die Lagerstellen 42, 44 stützen die Welle 28 in nicht näher dargestellter Weise an dem Innengehäuse 46 ab.

Zwischen dem Innengehäuse 46 und der Zuleitung 32 des Außengehäuses 30 ist ein Ringspalt **48** ausgebildet. Im Betrieb des Turbosatzes 10 strömt das Fluid durch den Ringspalt 48 an dem Generator 14 vorbei. Außenseitig weist das Innengehäuse 46 Kühlrippen **50** auf. Die Kühlrippen 50 ragen in zu der Längsachse 40 radialer Richtung in den Ringspalt 48 hinein. Im Betrieb werden die Kühlrippen 50 somit von dem strömenden Fluid überstrichen, sodass der Generator 14 gekühlt wird. Zur Verbesserung der Wärmeableitung kann der Stator 38 in nicht näher dargestellter, aber an und für sich bekannter Weise wärmeleitend mit den Kühlrippen 50 verbunden sein.

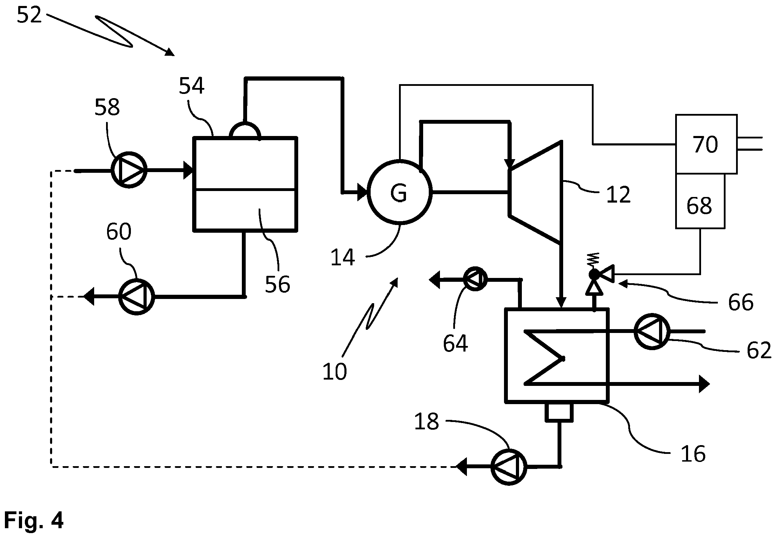

**Fig. 4** zeigt eine Niederdruckdampfturbinenanlage **52.** Die Niederdruckdampfturbinenanlage 52 weist einen Turbosatz 10 mit einer Turbine 12 und einem Generator 14 auf. Die Turbine 12 ist eine Axialturbine. Die Turbine 12 treibt den Generator 14 an. Die Niederdruckdampfturbinenanlage 52 weist weiterhin einen Entspannungsverdampfer **54** auf. In dem Entspannungsverdampfer 54 wird flüssiges Wärmeträgermedium **56**, z.B.

Wasser, verdampft, sodass dampfförmiges Fluid erhalten wird. Das flüssige Wärmeträgermedium wird durch eine Vorlaufpumpe **58** in den Entspannungsverdampfer 54 gefördert. Das Wärmeträgermedium 56 kann durch eine Rücklaufpumpe **60** aus dem Entspannungsverdampfer 54 abgezogen und einer erneuten Erwärmung und Einspeisung in den Entspannungsverdampfer 54 zugeführt werden. Der Druck in dem Entspannungsverdampfer 54 ist so gering, dass das Wärmeträgermedium verdampft. Der Druck im Entspannungsverdampfer 54 liegt unter dem Umgebungsdruck. Wasser als Wärmeträgermedium 56 kann beispielsweise bei 0,3 bis 0,7 bar und 80°C bis 90°C in die Dampfphase überführt werden. Der entstandene Dampf wird durch eine Zuleitung an dem Generator 14 vorbeigeführt und in der Turbine 12 entspannt.

Aus der Turbine 12 gelangt der entspannte Dampf in einen Kondensator 16. Dort wird der Dampf gekühlt, sodass er kondensiert und flüssiges Wärmeträgermedium erhalten wird. Hierzu kann ein Kühlmedium mittels einer Kühlmediumpumpe **62** durch den Kondensator 16 gefördert werden. Durch eine Kondensatpumpe 18 kann das kondensierte Fluid/Wärmeträgermedium in einen Kreislauf zurückgefördert werden. Die Kondensatpumpe 18 bildet hier einen Teil einer Rückführeinrichtung, mittels der flüssiges Wärmeträgermedium aus dem Kondensator 16 in den Entspannungsverdampfer 54 zurückgeführt wird.

Die Niederdruckdampfturbinenanlage 52 weist eine Evakuierungsanlage **64**, z.B. eine Vakuumpumpe, auf, die hier an dem Kondensator 16 angeordnet ist. Durch die Evakuierungsanlage (Evakuierungseinrichtung) 64 wird der Druck in einem dampfführenden Bereich der Niederdruckdampfturbinenanlage 52 unter den Umgebungsdruck abgesenkt.

Die Niederdruckdampfturbinenanlage 52 weist weiterhin einen Vakuumbrecher **66** auf, der stromabwärts eines Turbinenrades der Turbine 12, hier an dem Kondensator 16, angeordnet ist. Durch Öffnen des Vakuumbrechers 66 kann Umgebungsluft in den Kondensator 16 einströmen. Dadurch kann der Betrieb der Niederdruckdampfturbinenanlage 52 gestoppt werden. Die Niederdruckdampfturbinenanlage 52 umfasst zur Ansteuerung des Vakuumbrechers 66 eine Steuereinheit **68.** Die Steuereinheit 68 öffnet bei Bedarf, etwa zum Zwecke einer Notabschaltung, den Vakuumbrecher 66.

Der Generator 14 ist an eine Leistungselektronik **70** der Niederdruckdampfturbinenanlage 52 angeschlossen. Der im Generator 14 erzeugte Strom wird über die Leistungselektronik 70 an einen Verbraucher, beispielsweise ein elektrisches Netz oder eine Batterie, abgegeben. Die Leistungselektronik 70 kann einen Frequenzumrichter aufweisen. Die elektrische Belastung des Generators 14 kann mittels der Leistungselektronik 70 und der Steuereinheit 68 verändert werden. Insbesondere kann die Belastung an Betriebsparameter der Niederdruckdampfturbinenanlage 52 angepasst werden, etwa derart, dass die Drehzahl der Turbine 12 auf einen Sollwert für die aktuellen Betriebsparameter eingeregelt wird. Hierzu wirkt die Steuereinheit 68 auf die Leistungselektronik 70 ein. In der Steuereinheit 68 können entsprechende Algorithmen hinterlegt sein.

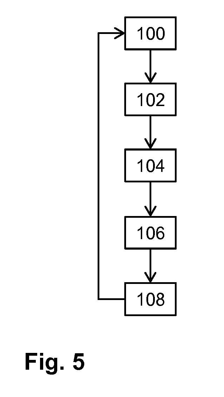

**Fig. 5** zeigt ein Ablaufdiagramm eines Betriebsverfahrens für einen Turbosatz, der Teil einer Niederdruckdampfturbinenanlage ist, vgl. Fig. 4. In einem Schritt **100** wird flüssiges Wärmeträgermedium verdampft, sodass dampfförmiges Fluid erhalten wird. Hierzu kommt ein Entspannungsverdampfer zum Einsatz, der das Fluid bei einem Druck von weniger als 1 bar, d.h. unterhalb des Umgebungsdrucks, verdampft. In einem anschließenden Schritt **102** wird das Fluid in eine Zuleitung (vgl. Fig. 3, Bezugszeichen 32) zu einer Turbine des Turbosatzes eingeleitet. In der Zuleitung wird das Fluid in einem Schritt **104** an einem Generator des Turbosatzes vorbeigeführt. Der Generator ist stromaufwärts der Turbine in der Zuleitung angeordnet. Sodann treibt das Fluid in einem Schritt **106** die Turbine an. Bei den Schritten 104 und 106 ist die Strömung des Fluids von dem Generator zu der Turbine gerichtet. Das Fluid strömt mit anderen Worten zunächst an dem Generator vorbei und anschließend durch die Turbine. Schließlich wird das dampfförmige Fluid in einem Schritt **108** kondensiert, sodass flüssiges Wärmeträgermedium erhalten wird. Dieses flüssige Wärmeträgermedium kann in einem Kreisprozess erneut den Schritten 102 bis 108 unterzogen werden.

Zusammenfassend betrifft die Erfindung einen fluidgekühlten, nämlich dampfgekühlten, Turbosatz 10 (Turbinengenerator), umfassend einen Generator 14 und eine Expansionsmaschine (Turbine 12), vorzugsweise eine Dampfturbine, die den Generator 14 antreibt. Die Turbine 12 dient der Umwandlung von thermischer Energie in mechanische Energie. Der Generator 14 dient der Umwandlung, der von der Turbine 12 bereitgestellten, mechanischen Energie in elektrische Energie. Der dampfgekühlte Turbinengenerator (Turbosatz 10) zeichnet sich dadurch aus, dass der Dampf (das Fluid) nach der Aufnahme der Verlustwärme des Generators 14 der Expansionsmaschine, vorzugsweise der Dampfturbine, zugeführt und dort entspannt wird. Um die im Generator 14 entstehende Verlustwärme sicher an den Dampf abführen zu können, kann ein Innengehäuse 46 des Generators 14 mit Kühlrippen 50 versehen sein, die von dem Dampf umströmt werden. Eine derartige Prozessführung führt zu einer inhärenten Kühlung des Generators 14, denn erst wenn Dampf strömt, kann die Turbine 12 arbeiten und den Generator 14 antreiben, dessen Kühlung durch die Dampfströmung ebenfalls sichergestellt ist. Diese Systemeigenschaft erlaubt eine deutliche Reduzierung der Maschinen- als auch der Anlagenkomplexität. Zum einen kann bei dem Generator 14 auf ein Kühlsystem verzichtet werden. Zum anderen kann in der Gesamtanlage ein Rückkühlkreis als auch die Überwachung der erwähnten Generatorkühlung entfallen.

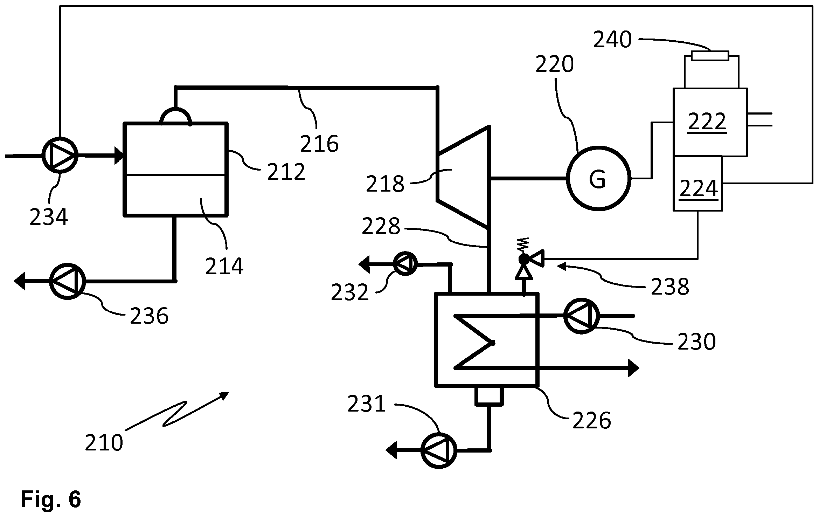

**Fig. 6** zeigt eine Niederdruckdampfturbinenanlage **210** in einer symbolischen Darstellung.

Die Niederdruckdampfturbinenanlage 210 weist einen Entspannungsverdampfer **212** auf. In dem Entspannungsverdampfer 212 wird im Betrieb der Niederdruckdampfturbinenanlage 210 flüssiges Wärmeträgermedium **214**, hier Wasser, bei einem Druck unterhalb des Umgebungsdrucks verdampft. Durch die Verdampfung des flüssigen Wärmeträgermediums 214 wird dampfförmiges Fluid erhalten.

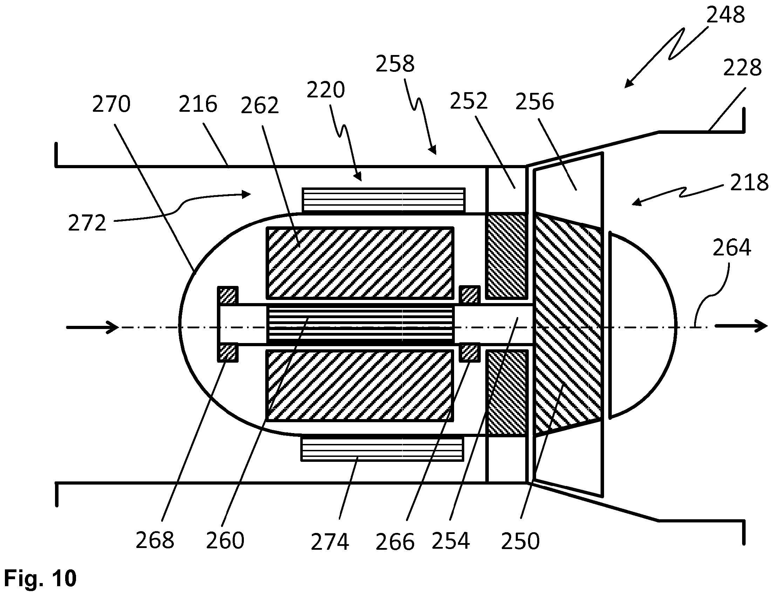

Das dampfförmige Fluid wird durch eine Zuleitung **216** der Niederdruckdampfturbinenanlage 210 zu einer Dampfturbine **218** der Niederdruckdampfturbinenanlage 210 geleitet. Die Zuleitung 216 verbindet den Entspannungsverdampfer 212 fluidisch mit der Dampfturbine 218. Die Dampfturbine 218 ist mechanisch mit einem Generator **220** gekoppelt. Der Generator 220 wird von der Dampfturbine 218 angetrieben. Der Generator kann eine Nennleistung von wenigstens 50 kW aufweisen. Typischerweise besitzt der Generator eine Nennleistung von höchstens 500 kW, bevorzugt höchstens 300 kW, besonders bevorzugt höchstens 200 kW, ganz besonders bevorzugt höchstens 100 kW. Der Generator 220 kann innerhalb der Zuleitung 216 stromaufwärts der Dampfturbine 218 angeordnet sein, vgl. Fig. 10. Das Fluid strömt dann zunächst an dem Generator 220 vorbei und wird sodann durch die Dampfturbine 218 geleitet. Beim Vorbeiströmen am Generator 220 kann das Fluid diesen kühlen.

Im Betrieb der Niederdruckdampfturbinenanlage 210 wandelt die Dampfturbine 218 thermische Energie des Fluids in mechanische Energie um. Von der Dampfturbine 218 bereitgestellte mechanische Energie wird von dem Generator 220 in elektrische Energie umgewandelt. Die Niederdruckdampfturbinenanlage 210 weist eine Leistungselektronik 222 auf, über die der Generator 220 an einen Verbraucher und/oder ein Stromnetz angeschlossen werden kann. Die Leistungselektronik 222 umfasst typischerweise einen Einspeiseumrichter mit einem Gleichrichter und einem Wechselrichter. Der Wechselrichter wandelt den von dem Generator 220 erzeugten, typischerweise hochfrequenten, Wechselstrom, in Gleichstrom um. Der Gleichstrom kann in einem Zwischenkreis des Einspeiseumrichters fließen. Der Wechselrichter erzeugt aus dem Gleichstrom Wechselstrom zum Einspeisen in ein Stromnetz oder zum Versorgen eines Verbrauchers. Der vom Wechselrichter erzeugte Wechselstrom weist grundsätzlich die am Einsatzort der Niederdruckdampfturbinenanlage übliche Frequenz und Spannung auf, beispielsweise 50 Hz und 230 V in Europa oder 400 V bei einem Drei-Phasen-Netz.

Eine Steuereinheit **224** der Niederdruckdampfturbinenanlage 210 ist dazu eingerichtet, die Belastung des Generators 220 durch die Leistungselektronik 222 zu verändern. Die in der Dampfturbine 218 umgesetzte Leistung wird im Wesentlichen durch den Druck des dampfförmigen Fluids vor und hinter der Dampfturbine 218 und den Massenstrom des dampfförmigen Fluids bestimmt. Die von der Dampfturbine 218 bereitgestellte mechanische Energie wird vom Generator 220 in elektrische Energie und Wärme umgesetzt. Wenn die von dem Generator 220 abgegebene elektrische Leistung der von der Dampfturbine 218 abgegebenen mechanischen Leistung abzüglich eines Umwandlungsverlusts im Generator 220 entspricht, bleibt die Drehzahl der Dampfturbine 218 konstant. Wenn die vom Generator 220 abgegebene elektrische Leistung kleiner ist als die von der Dampfturbine 218 abgegebene mechanische Leistung abzüglich eines Umwandlungsverlusts im Generator 220, steigt die Drehzahl der Dampfturbine 218 an. Wenn dem Generator 220 (kurzzeitig) mehr elektrische Leistung abverlangt wird, als es der von der Dampfturbine 218 abgegebenen mechanischen Leistung abzüglich eines Umwandlungsverlusts im Generator 220 entspricht, wird zur Bereitstellung der Leistungsdifferenz kinetische Energie der Rotation eines Läufers (umfassend beispielsweise ein Turbinenrad, eine Welle und einen Rotor) von Dampfturbine 218 und Generator 220 in elektrische Energie umgesetzt. Dadurch sinkt die Drehzahl der Dampfturbine 218. Auf diese Weise kann die Steuereinheit 224 mittels der Leistungselektronik 222 über die Leistungsabgabe des Generators 220 die Drehzahl der Dampfturbine 218 beeinflussen.

Die Niederdruckdampfturbinenanlage 210 weist einen Kondensator **226** auf. Der Kondensator 226 ist über eine Ableitung **228** der Niederdruckdampfturbinenanlage 210 fluidisch mit der Dampfturbine 218 verbunden. Nachdem das dampfförmige Fluid in der Dampfturbine 218 unter Energieabgabe entspannt wurde, wird es durch die Ableitung 228 in den Kondensator 226 geleitet. In dem Kondensator 226 wird das dampfförmige Fluid durch Wärmeabfuhr kondensiert, sodass flüssiges Wärmeträgermedium 214 erhalten wird. Der Druck im Kondensator 226 liegt im Betrieb der Niederdruckdampfturbinenanlage 210 unterhalb des Umgebungsdrucks. Eine Kühlmediumpumpe **230** versorgt den Kondensator 226 mit Kühlmedium, beispielsweise Wasser. Das Kühlmedium hat beim Eintritt in den Kondensator 226 typischerweise eine Temperatur von 10°C bis 20°C. Durch das Kühlmedium wird die Wärmeabfuhr aus dem Fluid bewirkt. Kondensiertes Wärmeträgermedium wird durch eine Kondensatpumpe **231** aus dem Kondensator 226 abgezogen. Das kondensierte Wärmeträgermedium hat beim Austritt aus dem Kondensator 226 typischerweise eine Temperatur von 32°C bis 60°C.

Die Zuleitung 216 und die Ableitung 228 sind Bestandteile eines Leitungssystems das den Entspannungsverdampfer 212 über die Dampfturbine 218 mit dem Kondensator 226 verbindet. Um den Druck in dem Entspannungsverdampfer 212 und dem Kondensator 226 unter den Umgebungsdruck zu senken, weist die Niederdruckdampfturbinenanlage 210 eine Evakuierungseinrichtung **232**, hier umfassend eine Vakuumpumpe, auf. Die Evakuierungseinrichtung 232 ist hier an dem Kondensator 226 angeordnet. Um die Niederdruckdampfturbinenanlage 210 in Betrieb zu setzen, werden mittels der Evakuierungseinrichtung 232 Gase aus dem Leitungssystem abgesaugt, bis der Druck unterhalb des Siededrucks des flüssigen Wärmeträgermediums 214 im Entspannungsverdampfer 212 liegt. Typischerweise wird die Evakuierungseinrichtung 232 derart betrieben, dass der Druck im Entspannungsverdampfer 212 bei 0,3 bis 0,7 bar liegt. Der Druck im Kondensator 226 liegt dann nach der Entspannung des Fluids in der Dampfturbine typischerweise bei 0,05 bis 0,2 bar.

Warmes Wärmeträgermedium 214 wird durch eine Vorlaufpumpe **234** in den Entspannungsverdampfer 212 gefördert. Eine Temperatur von Wasser als Wärmeträgermedium liegt im Vorlauf typischerweise bei 95°C bis 105°C. Zum Erwärmen des Wärmeträgermediums kann beispielsweise Abwärme aus einem Prozess verwendet werden. Im Entspannungsverdampfer 212 stehendes Wasser als Wärmeträgermedium weist typischerweise eine Temperatur von 70°C bis 90°C auf. Bei diesen Temperaturen siedet Wasser bei den vorgenannten Drücken von 0,3 bis 0,7 bar. Die Steuereinheit 224 ist dazu ausgebildet, die Förderleistung der Vorlaufpumpe 234 zu verändern. Dadurch kann eine Verdampfungsrate des Wärmeträgermediums beeinflusst werden. Diese wirkt sich wiederum auf die in der Dampfturbine 218 umsetzbare Leistung aus. Durch die Verdampfung des Wärmeträgermediums 214 im Entspannungsverdampfer 212 kühlt das Wärmeträgermedium 214 ab. Es wird daher über eine Rücklaufpumpe **236** aus dem Entspannungsverdampfer 212 abgezogen.

Stromabwärts eines Turbinenrades der Dampfturbine 218 weist die Niederdruckdampfturbinenanlage 210 einen Vakuumbrecher **238** auf. Der Vakuumbrecher 238 ist hier am Kondensator 226 angeordnet. Die Steuereinheit 224 ist dazu eingerichtet, den Vakuumbrecher 238 zu öffnen. Aufgrund des geringen Drucks im Kondensator 226 strömt bei geöffnetem Vakuumbrecher Luft aus der Umgebung in den Kondensator 226 und von diesem in die Ableitung 228. Dadurch steigt der Druck stromabwärts der Dampfturbine 218.

Dies senkt das der Dampfturbine 218 zur Verfügung stehende isentrope Enthalpiegefälle, so dass die Leistung der Dampfturbine 218 sinkt. Bei gleichbleibender Belastung des Generators 220 sinkt dadurch die Drehzahl der Dampfturbine 218 und des mit dieser gekoppelten Generators 220. Wenn eine ausreichend große Menge Umgebungsluft in die Niederdruckdampfturbinenanlage 210 eingeströmt ist, kommt der Betrieb der Niederdruckdampfturbinenanlage 210 schließlich zum Erliegen. Der Vakuumbrecher 238 fungiert auf diese Weise als ein Sicherheitsorgan, durch das die Niederdruckdampfturbinenanlage 210 abgeschaltet werden kann. In der Zuleitung 216 und an der Dampfturbine 218 sind demgegenüber keine Sicherheitsorgane wie Schnellschlussventile oder Schnellschlussklappen und keine Regelorgane wie Regelventile oder Regelklappen vorhanden.

Die Niederdruckdampfturbinenanlage 210 weist hier weiterhin einen Bremswiderstand **240** auf. Der Bremswiderstand 240 ist elektrisch mit der Leistungselektronik 222 verbunden. Die Steuereinheit 224 ist dazu eingerichtet, über die Leistungselektronik 222 elektrische Energie in dem Bremswiderstand 240 in Wärme umzusetzen. Dadurch kann eine zusätzliche Belastung des Generators 220 erreicht werden, wenn eine Grenze der Leistungsabgabe in das Stromnetz oder an den Verbraucher erreicht ist. Durch Einleiten elektrischen Stroms aus dem Generator 220 in den Bremswiderstand 240 kann bei ansonsten gleichbleibenden Betriebsparametern der Niederdruckdampfturbinenanlage 210 die Drehzahl der Dampfturbine 218 gesenkt werden.

In der Steuereinheit 224 der Niederdruckdampfturbinenanlage 210 ist ein Kennfeld hinterlegt. Das Kennfeld verknüpft einen Betriebszustand der Niederdruckdampfturbinenanlage 210 mit einem Sollwert der Drehzahl der Dampfturbine 218. Zur Definition des Betriebszustands können eine oder mehrere der Größen Druck in der Zuleitung, Druck in der Ableitung, Temperatur des dampfförmigen Fluids in der Zuleitung und/oder in dem Entspannungsverdampfer, Temperatur des dampfförmigen Fluids in der Ableitung und/oder in dem Kondensator, Enthalpie des Fluids in der Zuleitung und/oder in der Ableitung herangezogen werden. Das Kennfeld enthält für eine Kombination von Zahlenwerten dieser Parameter einen jeweils zugeordneten Sollwert der Drehzahl. Für nicht hinterlegte Zahlenwerte kann eine Interpolation zu benachbarten Werten vorgenommen werden. Die Steuereinheit 224 ist dazu eingerichtet die Drehzahl der Dampfturbine 218 auf den Sollwert des vorliegenden Betriebszustandes einzuregeln. Dazu kann ein Regelungsalgorithmus in der Steuereinheit 224 hinterlegt sein. In dem Kennfeld und dem Regelungsalgorithmus sind mit anderen Worten die thermodynamischen Größen, die das isentrope Enthalpiegefälle beeinflussen, erfasst und regelungstechnisch aufbereitet. Zur Regelung der Drehzahl kann die Steuereinheit 224 vorzugsweise wie oben beschrieben die Belastung des Generators 220 über die Leistungselektronik 222 und die Förderleistung der Vorlaufpumpe 234 verändern. Insbesondere wenn diese Maßnahmen nicht ausreichen, um in einem zulässigen Bereich eines Betriebsparameters zu bleiben, kann die Steuereinheit 224 zusätzlich oder alternativ zu diesen Maßnahmen den Vakuumbrecher 238 öffnen und/oder elektrische Energie in den Bremswiderstand 240 leiten.

Die Steuereinheit 224 ist ferner dazu eingerichtet, die Rücklaufpumpe 236, die Kondensatpumpe 231, die Kühlmediumpumpe 230 und die Evakuierungseinrichtung 232 anzusteuern und insbesondere deren jeweilige Förder- bzw. Saugleistung zu verändern. Der Übersichtlichkeit halber sind in Fig. 6 entsprechende Steuerleitungen nicht eingezeichnet.

Die Niederdruckdampfturbinenanlage kann in einer nicht näher dargestellten Ausführungsform mehrstufig gestaltet sein. Dazu ist der Rücklauf des Entspannungsverdampfers, der auf der höchsten Temperatur arbeitet, mit dem Zulauf (Vorlauf) eines weiteren Entspannungsverdampfers verbunden, der auf einem niedrigeren Druckniveau entsprechend seiner (niedrigeren) Zulauftemperatur arbeitet. Auf diese Weise lassen sich mehrere Entspannungsverdampfer hintereinander schalten. Das dampfförmiger Fluid aus den mehreren Entspannungsverdampfern kann einer gemeinsamen Dampfturbine zugeführt werden. Alternativ können auch mehrere Dampfturbinen aus jeweils einem oder mehreren der mehreren Entspannungsverdampfer mit Fluid versorgt werden.

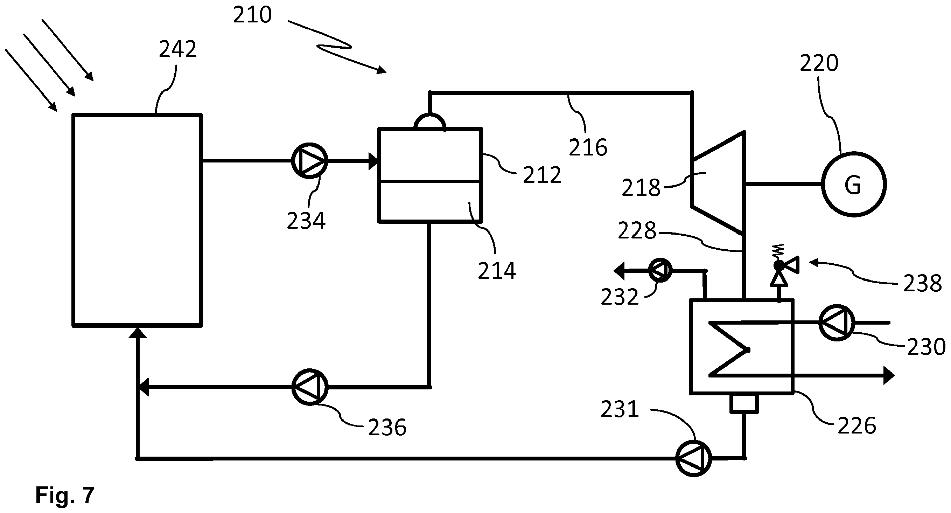

**Fig. 7** zeigt eine Niederdruckdampfturbinenanlage 210 mit den Komponenten der Niederdruckdampfturbinenanlage 210 gemäß Fig. 6 und weiterhin aufweisend einen solarthermischen Wärmeerzeuger **242.** Aufbau und Funktion der Niederdruckdampfturbinenanlage 210 von Fig. 7 entsprechen - vom solarthermischen Wärmeerzeuger 242 abgesehen - der Niederdruckdampfturbinenanlage 210 von Fig. 6. Für die übernommenen Komponenten und deren Funktion sei auf die obige Beschreibung verwiesen. Die Leistungselektronik 222, die Steuereinheit 224 und der Bremswiderstand 240 sind in Fig. 7 nicht eingezeichnet; diese Komponenten sind jedoch genauso vorhanden und ausgebildet wie bei der Niederdruckdampfturbinenanlage 210 von Fig. 6.

Durch den solarthermischen Wärmeerzeuger 242 wird die Niederdruckdampfturbinenanlage 210 zu einem solarthermischen Kraftwerk erweitert. In dem solarthermischen Wärmeerzeuger 242 wird flüssiges Wärmeträgermedium 214, hier Wasser, durch Sonnenstrahlung erwärmt, vgl. Pfeile von schräg oben. Die Vorlaufpumpe 234 fördert das warme Wärmeträgermedium 214 aus dem solarthermischen Wärmeerzeuger 242 in den Entspannungsverdampfer 212. Im Entspannungsverdampfer 212 wird das Wärmeträgermedium 214 unter Unterdruck verdampft, sodass dampfförmiges Fluid erhalten wird. Das dampfförmige Fluid treibt die Dampfturbine 218 an.

Durch die Verdampfung kühlt das im Entspannungsverdampfer 212 stehende, flüssige Wärmeträgermedium 214 ab. Dieses Wärmeträgermedium 214 wird durch die Rücklaufpumpe 236 zurück in den solarthermischen Wärmeerzeuger 242 gefördert. Dort wird das Wärmeträgermedium 214 erneut durch Sonnenstrahlung erwärmt und sodann in den Entspannungsverdampfer 212 eingeleitet. Auf diese Weise ist ein erster Kreislauf (Kreisprozess) eingerichtet.

Nach Durchtritt durch die Dampfturbine 218 wird das dampfförmige Fluid im Kondensator 226 unter Unterdruck kondensiert, sodass wieder flüssiges Wärmeträgermedium 214 erhalten wird. Das flüssige Wärmeträgermedium 214 wird durch die Kondensatpumpe 231 in den solarthermischen Wärmeerzeuger 242 gefördert. Dort wird das Wärmeträgermedium 214 erneut durch Sonnenstrahlung erwärmt und sodann in den Entspannungsverdampfer 212 eingeleitet. Auf diese Weise ist ein zweiter Kreislauf (Kreisprozess) eingerichtet. Die Kondensatpumpe 231, der solarthermische Wärmeerzeuger 242 und die Vorlaufpumpe 234 bilden hierbei eine Rückführeinrichtung, um flüssiges Wärmeträgermedium aus dem Kondensator 226 in den Entspannungsverdampfer 212 zurückzuführen.

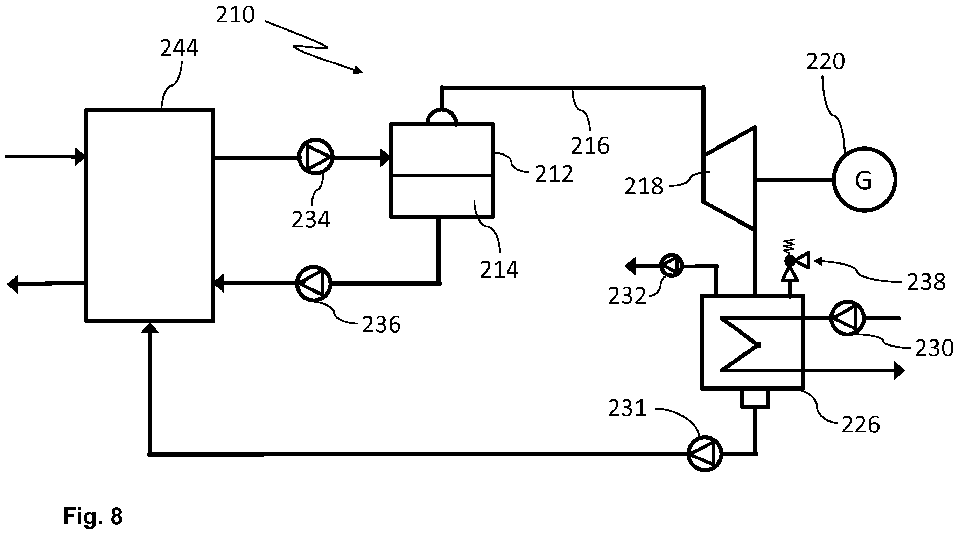

**Fig. 8** zeigt eine Niederdruckdampfturbinenanlage 210 mit den Komponenten der Niederdruckdampfturbinenanlage 210 gemäß Fig. 6 und weiterhin aufweisend einen Wärmespeicher **244.** Aufbau und Funktion der Niederdruckdampfturbinenanlage 210 von Fig. 8 entsprechen - vom Wärmespeicher 244 abgesehen - der Niederdruckdampfturbinenanlage 210 von Fig. 6. Für die übernommenen Komponenten und deren Funktion sei auf die obige Beschreibung verwiesen. Die Leistungselektronik 222, die Steuereinheit 224 und der Bremswiderstand 240 sind in Fig. 8 nicht eingezeichnet; diese Komponenten sind jedoch genauso vorhanden und ausgebildet wie bei der Niederdruckdampfturbinenanlage 210 von Fig. 6.

In dem Wärmespeicher 244 wird warmes, flüssiges Wärmeträgermedium 214, hier Wasser, bevorratet. Warmes Wärmeträgermedium 214 wird dem Wärmespeicher 244 aus einer nicht dargestellten Heizvorrichtung zugeführt, vgl. linker, oberer Pfeil in den Wärmespeicher 244 hinein. Bei der Bevorratung im Wärmespeicher 244 kühlt das Wärmeträgermedium 214 ab. Es wird daher einer erneuten Erwärmung in der Heizvorrichtung zugeführt, vgl. linker, unterer Pfeil aus dem Wärmespeicher 244 heraus.

Die Vorlaufpumpe 234 fördert das warme Wärmeträgermedium 214 aus dem Wärmespeicher 244 in den Entspannungsverdampfer 212. Im Entspannungsverdampfer 212 wird das Wärmeträgermedium 214 unter Unterdruck verdampft, sodass dampfförmiges Fluid erhalten wird. Das dampfförmige Fluid treibt die Dampfturbine 218 an.

Durch die Verdampfung kühlt das im Entspannungsverdampfer 212 stehende, flüssige Wärmeträgermedium 214 ab. Dieses Wärmeträgermedium 214 wird durch die Rücklaufpumpe 236 zurück in den Wärmespeicher 244 gefördert. Auf diese Weise ist ein erster Kreislauf (Kreisprozess) eingerichtet.

Aus dem Wärmespeicher 244 wird das Wärmeträgermedium 214 erneut der Heizvorrichtung zugeführt und dort erwärmt. Sodann wird das erwärmte Wärmeträgermedium wieder in den Wärmespeicher 244 eingeleitet. Auf diese Weise ist ein zweiter Kreislauf (Kreisprozess) eingerichtet. Aus dem Wärmespeicher 244 wird das erwärmte Wärmeträgermedium erneut in den Entspannungsverdampfer 212 gefördert, und so fort.

Nach Durchtritt durch die Dampfturbine 218 wird das dampfförmige Fluid im Kondensator 226 unter Unterdruck kondensiert, sodass wieder flüssiges Wärmeträgermedium 214 erhalten wird. Das flüssige Wärmeträgermedium 214 wird durch die Kondensatpumpe 231 in den Wärmespeicher 244 gefördert. Auf diese Weise ist ein dritter Kreislauf (Kreisprozess) eingerichtet. Aus dem Wärmespeicher 244 wird das Wärmeträgermedium 214 erneut in die Heizvorrichtung gefördert und dort erwärmt. Sodann wird das Wärmeträgermedium 214 erneut in den Entspannungsverdampfer 212 eingeleitet. Die Kondensatpumpe 231, der Wärmespeicher 244 und die Vorlaufpumpe 234 bilden eine Rückführeinrichtung, um flüssiges Wärmeträgermedium aus dem Kondensator 226 in den Entspannungsverdampfer 212 zurückzuführen.

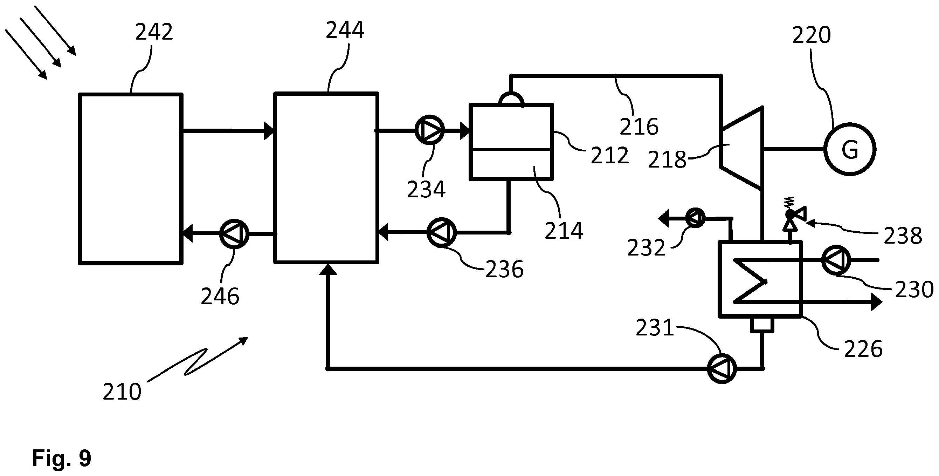

**Fig. 9** zeigt eine Niederdruckdampfturbinenanlage 210 mit den Komponenten der Niederdruckdampfturbinenanlage 210 gemäß Fig. 8 und weiterhin aufweisend einen solarthermischen Wärmeerzeuger 242. Der solarthermische Wärmeerzeuger 242 fungiert als eine oben beschriebene Heizvorrichtung für das flüssige Wärmeträgermedium 214. Auf diese Weise wird ein solarthermisches Speicherkraftwerk erhalten.

Aufbau und Funktion der Niederdruckdampfturbinenanlage 210 von Fig. 9 entsprechen - vom solarthermischen Wärmeerzeuger 242 abgesehen - der Niederdruckdampfturbinenanlage 210 von Fig. 8. Für die übernommenen Komponenten und deren Funktion sei auf die obige Beschreibung verwiesen. Die Leistungselektronik 222, die Steuereinheit 224 und der Bremswiderstand 240 sind in Fig. 9 nicht eingezeichnet; diese Komponenten sind jedoch genauso vorhanden und ausgebildet wie bei der Niederdruckdampfturbinenanlage 210 von Fig. 6.

Wie bereits erwähnt, übernimmt der solarthermische Wärmeerzeuger 242 bei der Niederdruckdampfturbinenanlage 210 von Fig. 9 die Funktion der Heizvorrichtung. Um das flüssige Wärmeträgermedium 214 aus dem Wärmespeicher 244 in den solarthermischen Wärmeerzeuger zu fördern, ist eine Heizkreispumpe **246** vorgesehen. Durch das Einleiten des Wärmeträgermediums 214 aus dem Wärmespeicher 244 in den solarthermischen Wärmeerzeuger 242 wird in dem solarthermischen Wärmeerzeuger 242 durch Sonnenstrahlung (vgl. Pfeile von schräg oben) erwärmtes Wärmeträgermedium 214 verdrängt und in den Wärmespeicher 244 gedrückt. Die Kondensatpumpe 231, der Wärmespeicher 244, die Heizkreispumpe 246, der solarthermische Wärmeerzeuger 242 und die Vorlaufpumpe 234 bilden eine Rückführeinrichtung, um flüssiges Wärmeträgermedium aus dem Kondensator 226 in den Entspannungsverdampfer 212 zurückzuführen.

Die Steuereinheit 224 ist dazu eingerichtet, die Heizkreispumpe 246 anzusteuern. Insbesondere kann die Steuereinheit 224 eine Förderleistung, beispielsweise einen Volumenstrom, der Heizkreispumpe 246 einstellen.

**Fig. 10** zeigt einen Turbosatz **248** aufweisend eine Dampfturbine 218 und einen Generator 220 für eine Niederdruckdampfturbinenanlage 210, wie sie beispielsweise in den Fign. 6 bis 9 gezeigt ist, in einem schematischen Längsschnitt. Der Generator 220 ist stromaufwärts eines Turbinenrades **250** der Dampfturbine 218 in einer Zuleitung 216 angeordnet.

Die Dampfturbine 218 ist als eine Axialturbine ausgebildet. Die Dampfturbine 218 weist das Turbinenrad 250 und ein Leitrad **252** auf. Das Leitrad 252 ist stromaufwärts des Turbinenrades 250 angeordnet, hier zwischen dem Turbinenrad 250 und dem Generator 220. Das Turbinenrad 250 ist mittels einer Welle **254** drehbar gelagert. Radial außen weist das Turbinenrad 250 eine Laufbeschaufelung **256** auf. Die Laufbeschaufelung 256 kann von dem Turbinenrad 250 separate Laufschaufeln umfassen, die an dem Turbinenrad 250 befestigt sind. Alternativ kann das Turbinenrad 250 einstückig ausgebildet sein, d.h. die Laufbeschaufelung 256 kann integraler Bestandteil des Turbinenrades 250 sein. Die Laufbeschaufelung 256 der Dampfturbine 218 kann im Impuls- oder im Reaktionsdesign ausgeführt sein. Das Leitrad 252 ist nicht drehbar an einem Außengehäuse **258** des Turbosatzes 248 gehalten. Das Außengehäuse 258 bildet stromaufwärts der Dampfturbine 218 die Zuleitung 216 mit aus. Stromabwärts der Dampfturbine 218 bildet das Außengehäuse 258 eine Ableitung 228 mit aus. Über die Zuleitung 216 wird der Dampfturbine 218 Fluid zugeführt. Über die Ableitung 228 wird entspanntes Fluid nach Durchtritt durch die Dampfturbine 218 abgeführt.

Innerhalb der Zuleitung 216 ist der Generator 220 angeordnet. Der Generator 220 befindet sich mithin stromaufwärts der Dampfturbine 218. Eine Richtung der Strömung durch den Turbosatz 248 ist in Fig. 10 durch Pfeile angedeutet. Die Strömung des Fluids verläuft hier geradlinig durch die Zuleitung 216 an dem Generator 220 vorbei und zu der Dampfturbine 218 hin.

Der Generator 220 weist einen Rotor **260** und einen Stator **262** auf. Der Rotor 260 ist auf derselben Welle 254 wie das Turbinenrad 250 angeordnet. Mithin ist der Rotor 260 zusammen mit dem Turbinenrad 250 um eine gemeinsame Längsachse **264** drehbar. Die Welle 254, der Rotor 260 und das Turbinenrad 250 bilden einen Läufer des Turbosatzes 248. Die Längsachse 264 kann für den Betrieb des Turbosatzes 248 horizontal, vertikal oder geneigt ausgerichtet sein.

Die Welle 254 ist in einer ersten Lagerstelle **266** und einer zweiten Lagerstelle **268** gelagert. Die erste Lagerstelle 266 befindet sich zwischen dem Rotor 260 und dem Turbinenrad 250. Die zweite Lagerstelle 268 befindet sich vom Turbinenrad 250 aus gesehen jenseits, d.h. stromaufwärts, des Rotors 260. Die Lagerstellen 266, 268 können in an und für sich bekannter Weise als Fest-/Loslageranordnung, schwimmende Stützlagerung oder angestellte Stützlagerung ausgeführt sein. Lager der Lageranordnungen 266, 268 können als Wälzlager, Gleitlager und/oder Magnetlager ausgebildet sein. Die Dampfturbine 218 kann öl-frei gelagert sein. Sollte als Wärmeträgermedium 214 Wasser zum Einsatz kommen, und das im Kondensator 226 entstandene Kondensat als Trink- bzw. als Brauchwasser weiter verarbeitet werden, kann dadurch eine Kontamination des Kondensats vermieden werden.

Der Stator 262 des Generators 220 ist in einem Innengehäuse **270** angeordnet. Das Innengehäuse 270 ist innerhalb der Zuleitung 216 angeordnet. Das Innengehäuse 270 kann sich über nicht näher dargestellte Stützen an dem Außengehäuse 258 abstützen. Die Lagerstellen 266, 268 stützen die Welle 254 in nicht näher dargestellter Weise an dem Innengehäuse 270 ab.

Zwischen dem Innengehäuse 270 und der Zuleitung 216 des Außengehäuses 258 ist ein Ringspalt **272** ausgebildet. Im Betrieb der Niederdruckdampfturbinenanlage 210 mit dem Turbosatz 248 strömt das Fluid durch den Ringspalt 272 an dem Generator 220 vorbei. Außenseitig weist das Innengehäuse 270 Kühlrippen **274** auf. Die Kühlrippen 274 ragen in zu der Längsachse 264 radialer Richtung in den Ringspalt 272 hinein. Im Betrieb werden die Kühlrippen 274 somit von dem strömenden Fluid überstrichen, sodass der Generator 220 gekühlt wird. Zur Verbesserung der Wärmeableitung kann der Stator 262 in nicht näher dargestellter, aber an und für sich bekannter Weise wärmeleitend mit den Kühlrippen 274 verbunden sein.

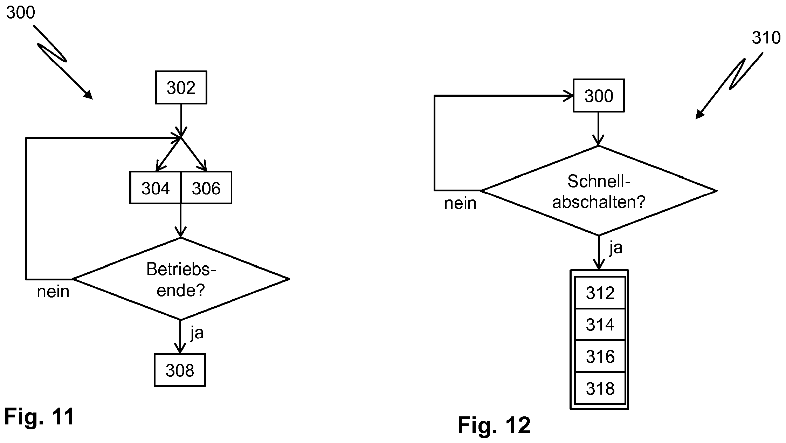

**Fig. 11** zeigt einen Ablaufplan für ein Betriebsverfahren für einen Normalbetrieb **300** einer Niederdruckdampfturbinenanlage 210, wie sie beispielsweise in den Fign. 6 bis 10 gezeigt ist. In einem Schritt **302** wird ein Leitungssystem der Niederdruckdampfturbinenanlage 210 evakuiert. Dabei sinkt der Druck in dem Leitungssystem überall auf einen Wert unterhalb des Umgebungsdrucks von 1 bar. Der Druck in dem Leitungssystem wird beim Evakuieren im Schritt 302 so weit abgesenkt, dass in einem Entspannungsverdampfer 212 der Niederdruckdampfturbinenanlage 210 flüssiges Wärmeträgermedium 214 verdampft. Durch das Verdampfen des Wärmeträgermediums 214 wird dampfförmiges Fluid erhalten. Das dampfförmige Fluid treibt eine Dampfturbine 218 der Niederdruckdampfturbinenanlage 210 an. Die Dampfturbine 218 treibt wiederum einen Generator 220 der Niederdruckdampfturbinenanlage 210 an. Der Generator 220 wandelt mechanische Energie, die ihm von der Dampfturbine 218 bereitgestellt wird, in elektrische Energie um.

In einem Schritt **304** wird die elektrische Belastung des Generators 220 verändert. Eine Steuereinheit 224 der Niederdruckdampfturbinenanlage 210 wirkt dazu auf eine Leistungselektronik 222 ein, über die der Generator 220 an einen Verbraucher und/oder ein Stromnetz angeschlossen ist. Durch das Verändern der elektrischen Belastung des Generators 220 verändert sich die Drehzahl der Dampfturbine 218.

In einem Schritt **306** wird eine Verdampfungsrate in dem Entspannungsverdampfer 212 verändert. Der Schritt 304 kann gleichzeitig mit oder vor oder nach dem Schritt 304 durchgeführt werden. Typischerweise werden die Schritte 304 und 306 wiederholt durchgeführt. Um die Verdampfungsrate zu verändern, verändert die Steuereinheit 224 eine Förderleistung einer Vorlaufpumpe 234, die warmes Wärmeträgermedium 214 in den Entspannungsverdampfer 212 fördert. Durch Verändern der Verdampfungsrate im Entspannungsverdampfer 212 wird die Leistung der Dampfturbine 218 beeinflusst, sodass - bei ansonsten gleichbleibenden Betriebsparametern - die Drehzahl der Dampfturbine 218 verändert wird.

Die Schritte 304 und 306 werden in einer solchen Weise durchgeführt, dass die Drehzahl der Dampfturbine 218 in Abhängigkeit von einem Betriebszustand der Niederdruckdampfturbinenanlage 210 auf einen Sollwert geregelt wird. Hierzu ist in der Steuereinheit 224 ein Kennfeld hinterlegt, das den Betriebszustand mit dem Sollwert verknüpft. Der Betriebszustand umfasst eine oder mehrere der Größen Druck in einer Zuleitung 216, Druck in einer Ableitung 228, Temperatur des dampfförmigen Fluids in der Zuleitung 216 und/oder in dem Entspannungsverdampfer 212, Temperatur des dampfförmigen Fluids in der Ableitung 228 und/oder in einem Kondensator 226, Enthalpie des Fluids in der Zuleitung 216 und/oder in der Ableitung 228.

Wenn der Betrieb der Niederdruckdampfturbinenanlage 210 beendet werden soll, wird in einem Schritt **308** ein Vakuumbrecher 238 stromabwärts eines Turbinenrades 250 der Dampfturbine 218 geöffnet. Dadurch strömt Umgebungsluft in das Leitungssystem und erhöht stromabwärts des Turbinenrades 250 den Druck in dem Leitungssystem. Dies senkt das an der Dampfturbine 218 anliegende isentrope Enthalpiegefälle bis schließlich die Dampfturbine 218 zum Stillstand kommt.

**Fig. 12** zeigt einen Ablaufplan eines Betriebsverfahrens für eine Schnellabschaltung **310** einer Niederdruckdampfturbinenanlage 210, wie sie beispielsweise in den Fign. 6 bis 10 gezeigt ist. Zunächst befindet sich die Niederdruckdampfturbinenanlage 210 im Normalbetrieb 300, beispielsweise gemäß Fig. 11. Falls eine Schnellabschaltung der Niederdruckdampfturbinenanlage 210 erforderlich ist, werden die folgenden Schritte gleichzeitig durchgeführt:
- der Vakuumbrecher 238 wird geöffnet (Schritt **312**),
- ein Volumenstrom von in den Entspannungsverdampfer 212 fließendem Wärmeträgermedium 214 wird auf null verringert (Schritt **314**),
- elektrische Energie aus dem Generator 220 wird in dem Bremswiderstand 240 in Wärme umgesetzt (Schritt **316**).

Zudem kann gleichzeitig mit den Schritten 312, 314 und 316 in einem Schritt **318** die Abgabe von elektrischer Leistung aus dem Generator 220 an einen Verbraucher und/oder ein Stromnetz maximiert werden.

Durch die Schritte 312 und 314 wird die in der Dampfturbine 218 maximal erzeugbare mechanische Leistung verringert. Durch den Schritt 314 kommt der Verdampfungsprozess zum Erliegen und der Dampfmassenstrom geht zurück. Durch die Schritte 316 und 318 wird die Leistungsabgabe des Generators 220 erhöht. Dies erhöht den Bedarf an mechanischer Leistung für den Generator 220. Wenn der Leistungsbedarf des Generators 220 die Leistungsfähigkeit der Dampfturbine 218 übersteigt, wird Rotationsenergie von Dampfturbine 218 und Generator 220 in elektrische Energie umgewandelt, sodass die Drehzahl der Dampfturbine 218 sinkt, bis diese zum Stillstand kommt.

Unter Vornahme einer Zusammenschau aller Figuren 6 bis 12 ist eine Niederdruckdampfturbinenanlage 210 beschrieben, die in wärmegeführter Gleitdruckfahrweise betrieben wird, und deren Drehzahl kennfeld-basiert, variabel geregelt wird. Die Niederdruckdampfturbinenanlage 210 zeichnet sich durch einen variablen Systemdruck auf der Dampfseite und eine reduzierte Anlagenkomplexität aus. Dies betrifft in besonderem Maße die Dampfturbine 218, die aufgrund der Fahrweise ohne vorgeschaltete Regelorgane (Regelventile oder -klappen) konzipiert ist. Druckverluste vor der Dampfturbine 218 werden dadurch minimiert, was sich positiv auf den Anlagenwirkungsgrad auswirkt.

Die Dampferzeugung innerhalb der Niederdruckdampfturbinenanlage 210 beruht auf dem Effekt der Flash-Verdampfung. Dazu wird der Systemdruck innerhalb eines Leitungssystems der Niederdruckdampfturbinenanlage 210 unter den Dampfdruck eines geeigneten Wärmeträgermediums 214 abgesenkt, bis Sattdampf entsteht. Das Wärmeträgermedium kann z.B. Wasser, Deionat (vollentsalztes Wasser), Süßwasser, Brackwasser oder Meerwasser sein. Die auftretenden Systemtemperaturen auf der Dampfseite liegen maximal so hoch wie die Siedetemperatur des verwendeten Wärmeträgermediums 214 bei dem vorherrschenden Umgebungsdruck. Die auftretenden Systemdrücke auf der Dampfseite liegen stets unterhalb des Umgebungsdrucks. Ein Austritt von heißem, dampfförmigem Fluid (verdampftem Wärmeträgermedium) ist somit ausgeschlossen. Dies reduziert das Gefahrenpotenzial erheblich. Aufgrund dieser Systemeigenschaft kann auf den Einsatz von Sicherheitsorganen (Schnellschlussventilen oder -klappen) an der Dampfturbine 218 oder in der Zuleitung 216 verzichtet werden.

Als ein der Dampfturbine 218 nachgeschaltetes Sicherheitsorgan wird am Kondensator 226 ein Vakuumbrecher 238 eingesetzt. Bei dessen Öffnen wird das System mit Umgebungsluft geflutet und der Prozess kommt zum Erliegen.

Die Dampfturbine 218 wird mit einem Generator 220 so zu einem Turbosatz 248 verbunden, dass beide Komponenten stets mit derselben, variablen Drehzahl laufen. Die Dampfturbine 218 und der Generator 220 können direkt gekuppelt oder mit einer Kupplung verbunden oder auf einer gemeinsamen Welle positioniert sein. Ein mechanisches Getriebe findet keine Anwendung. Die Dampfturbine 218 kann ein- oder mehrstufig ausgeführt sein. Die Anpassung des im Generator 220 erzeugten Stroms an die vorherrschende Netzfrequenz sowie die Drehzahlregelung des Turbosatzes 248 erfolgen über einen Einspeiseumrichter einer Leistungselektronik 222. Der Drehzahlsollwert wird über ein Kennfeld ermittelt, dass in einer Steuereinheit 224 hinterlegt wird. Die Drehzahl der Dampfturbine 218 und des mit ihr gekuppelten Generators 220 wird über das Belasten oder Entlasten des Generators über den Einspeiseumrichter verändert. Als Stellgröße für die Drehzahlregelung der Dampfturbine 218 und des mit ihr gekuppelten Generators 220 kann
- das der Dampfturbine 218 zur Verfügung stehende isentrope Enthalpiegefälle,
- die der Dampfturbine 218 zur Verfügung stehende Druckdifferenz,
- die der Dampfturbine 218 zur Verfügung stehende Temperaturdifferenz, und/oder
- ein in der Steuereinheit 224 hinterlegtes Kennfeld
herangezogen werden.

Der dampfseitige Druck im Entspannungsverdampfer 212, in der Zuleitung 216 und vor der Dampfturbine 218 ist variabel. Er stellt sich in Abhängigkeit der Temperatur des dem Entspannungsverdampfers 212 zugeführten Wärmeträgermediums 214 und der dem Entspannungsverdampfer 212 zugeführten Wärmemenge ein.

Der Dampfmassenstrom, der der Dampfturbine 218 zugeführt wird, ist variabel. Er stellt sich in Abhängigkeit der Temperatur des dem Entspannungsverdampfer 212 zugeführten Wärmeträgermediums 214 und der dem Entspannungsverdampfer 212 zugeführten Wärmemenge ein. Auf die dem Entspannungsverdampfer 212 zugeführte Wärmemenge kann über die Vorlaufpumpe 234 regelungstechnisch Einfluss genommen werden. Die elektrische Leistung der Niederdruckdampfturbinenanlage 210 ist von der dem Entspannungsverdampfer 212 zugeführten Wärmemenge und von der Temperatur des Wärmeträgermediums 214 abhängig. Über eine Regelung des Massenstroms bzw. Volumenstroms an Wärmeträgermedium 214 kann die elektrische Leistung geregelt werden.

Das isentrope Enthalpiegefälle, das der Dampfturbine 218 zur Verfügung steht, ist variabel. Da in dem Entspannungsverdampfer 212 ausschließlich Sattdampf erzeugt wird, ist es abhängig von dem Druck, der sich vor der Dampfturbine 218 einstellt, und von dem Druck, der im Kondensator 226 herrscht.

Die Niederdruckdampfturbinenanlage 210 zeichnet sich aufgrund des wärmegeführten Gleitdruckbetriebs und der drehzahlgeregelten Dampfturbine 218 durch einen erweiterten Betriebsbereich gegenüber konventionell betriebenen Anlagen aus. Darüber hinaus wird durch die dem isentropen Enthalpiegefälle angepasste Drehzahl die Dampfturbine 218 immer im optimalen Wirkungsgrad oder nahe des optimalen Wirkungsgrads für den jeweiligen Lastpunkt betrieben, was sich positiv auf den Anlagenwirkungsgrad auswirkt.

Nach alledem weist die Niederdruckdampfturbinenanlage 210 folgendes auf:
- einen Entspannungsverdampfer 212, zum Verdampfen von flüssigem Wärmeträgermedium 214, wobei der Druck in dem Entspannungsverdampfer 212 unter dem Umgebungsdruck liegt,
- eine Dampfturbine 218,
- einen Generator 220, der mit der Dampfturbine 218 gekoppelt ist,
- eine Leistungselektronik 222 zum Anschließen des Generators 220 an einen Verbraucher und/oder ein Stromnetz,
- einen Kondensator 226, zum Kondensieren des im Betrieb aus der Dampfturbine 218 austretenden dampfförmigen Fluids, wobei der Druck in dem Kondensator 226 unter dem Umgebungsdruck liegt,
- einen Vakuumbrecher 238, der stromabwärts eines Turbinenrades 250 der Dampfturbine 218 angeordnet ist, und
- eine Steuereinheit 224, die dazu eingerichtet ist, die elektrische Belastung des Generators 220 durch die Leistungselektronik 222 zu verändern und den Vakuumbrecher 238 zu öffnen.

Weiter umfasst ein Betriebsverfahren für eine Niederdruckdampfturbinenanlage 210, die Schritte
a) Evakuieren eines Leitungssystems der Niederdruckdampfturbinenanlage 210, sodass der Druck in dem Leitungssystem überall unter dem Umgebungsdruck liegt und sodass Wärmeträgermedium 214 in einem Entspannungsverdampfer 212 verdampft,
b) Verändern der elektrischen Belastung eines Generators 220,
c) Öffnen eines Vakuumbrechers 238.

### Bezugszeichenliste

Turbosatz **10, 248**
Turbine **12**
Generator **14, 220**
Kondensator **16, 226**
Kondensatpumpe **18, 231**
Temperatursensor **20**
Einspritzvorrichtung **22**
Turbinenrad **24, 250**
Laufbeschaufelung **25, 256**
Leitrad **26, 252**
Welle **28, 254**
Außengehäuse **30, 258**
Zuleitung **32, 216**
Ableitung **34, 228**
Rotor **36, 260**
Stator **38, 262**
Längsachse **40, 264**
erste Lagerstelle **42, 266**
zweite Lagerstelle **44, 268**
Innengehäuse **46, 270**
Ringspalt **48, 272**
Kühlrippen **50, 274**
Niederdruckdampfturbinenanlage **52, 210**
Entspannungsverdampfer **54, 212**
flüssiges Wärmeträgermedium **56, 214**
Vorlaufpumpe **58, 234**
Rücklaufpumpe **60, 236**
Kühlmediumpumpe **62, 230**
Evakuierungsanlage **64**
Vakuumbrecher **66, 238**
Steuereinheit **68, 224**
Leistungselektronik **70, 222**
Verdampfen **100**
Einleiten **102**
Vorbeiführen **104**
Antreiben **106**
Kondensieren **108**
Dampfturbine **218**
Evakuierungseinrichtung **232**
Bremswiderstand **240**
solarthermischer Wärmeerzeuger **242**
Wärmespeicher **244**
Heizkreispumpe **246**
Normalbetrieb **300**
Evakuieren **302**
Belastung verändern **304**
Verdampfungsrate verändern **306**
Vakuumbrecher öffnen **308**
Schnellabschaltung **310**
Vakuumbrecher öffnen **312**
Volumenstrom verringern **314**
Energie im Bremswiderstand umsetzen **316**
Leistungsabgabe maximieren **318**

## Patentansprüche

1. Betriebsverfahren für einen Turbosatz (10, 248), aufweisend eine Turbine (12) und einen Generator (14, 220), der innerhalb einer Zuleitung (32, 216) zu der Turbine (12) angeordnet ist,
mit den Schritten
b) Einleiten (102) eines gasförmigen Fluids in Form von Dampf in die Zuleitung (32, 216),
c) Vorbeiführen (104) des Fluids an dem Generator (14, 220),
d) Antreiben (106) der Turbine (12) mittels des Fluids,
wobei eine Strömung des Fluids von dem Generator (14, 220) zu der Turbine (12) gerichtet ist,
und wobei ein Druck in der Zuleitung (32, 216) und in der Turbine (12) unter dem Umgebungsdruck liegt.

2. Betriebsverfahren nach Anspruch 1, **dadurch gekennzeichnet, dass** das Fluid Nassdampf oder Sattdampf ist.

3. Betriebsverfahren nach Anspruch 1 oder 2 mit den weiteren Schritten a) Verdampfen (100) eines flüssigen Wärmeträgermediums (56, 214), sodass dampfförmiges Fluid erhalten wird,
e) Kondensieren (108) des dampfförmigen Fluids nachdem es die Turbine (12) durchströmt hat, sodass flüssiges Wärmeträgermedium (56, 214) erhalten wird.

4. Betriebsverfahren nach Anspruch 3, **dadurch gekennzeichnet,**
**dass** die Turbine (12) als Dampfturbine (218) ausgebildet ist,
**dass** zur Durchführung von Schritt a) ein Leitungssystem, das einen Entspannungsverdampfer (54, 212) über die Zuleitung (32, 216), die Dampfturbine (218) und eine Ableitung (34, 228) mit einem Kondensator (16, 226) verbindet, evakuiert (302) wird, sodass der Druck in dem Leitungssystem überall unter dem Umgebungsdruck liegt und sodass Wärmeträgermedium (56, 214) in dem Entspannungsverdampfer (54, 212) verdampft,
**dass**, insbesondere während der Durchführung von Schritt d), die elektrischen Belastung des Generators (14, 220) verändert (304) wird, und dass der Vakuumbrecher (66, 238) geöffnet (308, 312) wird.

5. Betriebsverfahren nach Anspruch 4, **dadurch gekennzeichnet, dass** gleichzeitig der Vakuumbrecher (66, 238) geöffnet (312) wird, ein Volumenstrom von in den Entspannungsverdampfer (54, 212) fließendem flüssigem Wärmeträgermedium (56, 214) verringert (314) wird, insbesondere auf null verringert wird, und elektrische Energie aus dem Generator (14, 220) in einem Bremswiderstand (40) in Wärme umgesetzt (316) wird.

6. Betriebsverfahren nach einem der vorhergehenden Ansprüche, **dadurch gekennzeichnet, dass** eine Temperatur des in die Zuleitung (32, 216) eingeleiteten Fluids höchstens 110°C, bevorzugt höchstens 100°C, besonders bevorzugt höchstens 90°C, beträgt.

7. Betriebsverfahren nach einem der vorhergehenden Ansprüche, **dadurch gekennzeichnet, dass** stromaufwärts des Generators (14, 220) eine Flüssigkeit in die Zuleitung (32, 216) eingespritzt wird.

8. Niederdruckdampfturbinenanlage (52, 210) aufweisend einen Turbosatz (10, 248) aufweisend eine Turbine (12), die als Axialturbine ausgebildet ist, und einen Generator (14, 220), der innerhalb einer Zuleitung (32, 216) zu der Turbine (12) angeordnet ist, wobei die Turbine (12) für eine Anströmung aus Richtung des Generators (14, 220) ausgebildet ist, und wobei die Turbine (12) als Niederdruckdampfturbine ausgebildet ist,
**gekennzeichnet durch** einen Entspannungsverdampfer (54, 212), zum Verdampfen von flüssigem Wärmeträgermedium (56, 214), sodass dampfförmiges Fluid erhalten wird,
und **dadurch**, dass die Zuleitung (32, 216) das im Entspannungsverdampfer (54, 212) entstandene dampfförmige Fluid an dem Generator (14, 220) vorbei zur Entspannung des dampfförmigen Fluids in die Turbine (12) führt,
und dass die Niederdruckdampfturbinenanalage (52,210) so ausgebildet ist, dass beim bestimmungsgemäßen Betrieb der Druck in dem Entspannungsverdampfer (54, 212), der Zuleitung (32, 216) und der Turbine (12) unter dem Umgebungsdruck liegt.

9. Niederdruckdampfturbinenanlage (52, 210) nach Anspruch 8, **dadurch gekennzeichnet, dass** ein Turbinenrad (24, 250) der Turbine (12) und ein Rotor (36, 260) des Generators (14, 220) um eine gemeinsame Längsachse (40, 264) drehbar sind, insbesondere dass das Turbinenrad (24, 250) und der Rotor (36, 260) auf einer gemeinsamen Welle (28, 254) angeordnet sind.

10. Niederdruckdampfturbinenanlage (52, 210) nach Anspruch 8 oder 9, **dadurch gekennzeichnet, dass** ein Leitrad (26, 252) der Turbine (12) zwischen dem Generator (14, 220) und einem Turbinenrad (24, 250) der Turbine (12) angeordnet ist.

11. Niederdruckdampfturbinenanlage (52, 210) nach einem der Ansprüche 8 bis 10, **dadurch gekennzeichnet, dass** ein Stator (38, 262) des Generators (14, 220) in einem Innengehäuse (46, 270) angeordnet ist, insbesondere wobei das Innengehäuse (46,270) außenseitig Kühlrippen (50, 274) aufweist.

12. Niederdruckdampfturbinenanlage (52, 210) nach einem der Ansprüche 8 bis 11, weiterhin aufweisend
- einen Kondensator (16, 226), zum Kondensieren des im Betrieb aus der Turbine (12) austretenden dampfförmigen Fluids, sodass flüssiges Wärmeträgermedium (56, 214) erhalten wird, wobei der Druck in dem Kondensator (16, 226) unter dem Umgebungsdruck liegt,
und vorzugsweise
- eine Rückführeinrichtung, um flüssiges Wärmeträgermedium (56, 214) aus dem Kondensator (16, 226) in den Entspannungsverdampfer (54, 212) zurückzuführen.

13. Niederdruckdampfturbinenanlage (52, 210) nach einem der Ansprüche 8 bis 12, weiterhin aufweisend
- einen Vakuumbrecher (66, 238), der stromabwärts eines Turbinenrades (24, 250) der Turbine (12) angeordnet ist,
- eine Leistungselektronik (70, 222) zum Anschließen des Generators (14, 220) an einen Verbraucher und/oder ein Stromnetz, und
- eine Steuereinheit (68, 224), die dazu eingerichtet ist, die elektrische Belastung des Generators (14, 220) durch die Leistungselektronik (70, 222) zu verändern und den Vakuumbrecher (66, 238) zu öffnen.

14. Niederdruckdampfturbinenanlage (52, 210) nach Anspruch 13, weiterhin aufweisend
- eine Vorlaufpumpe (58, 234), um flüssiges Wärmeträgermedium (56, 214) in den Entspannungsverdampfer (54, 212) zu fördern, wobei die Steuereinheit (68, 224) dazu ausgebildet ist, eine Förderleistung der Vorlaufpumpe (58, 234) zu verändern, und/oder
- einen Bremswiderstand (240), insbesondere wobei die Steuereinheit (68, 224) dazu eingerichtet, elektrische Energie aus dem Generator (14, 220) in dem Bremswiderstand (240) in Wärme umzuwandeln.

## Claims

1. Operating method for a turbo set (10, 248) comprising a turbine (12) and a generator (14, 220) which is arranged within a supply line (32, 216) to the turbine (12), comprising the steps of
b) introducing (102) a gaseous fluid in the form of steam into the supply line (32, 216),
c) passing (104) the fluid past the generator (14, 220),
d) driving (106) the turbine (12) by means of the fluid,
wherein a flow of the fluid is directed from the generator (14, 220) to the turbine (12), and wherein a pressure in the supply line (32, 216) and in the turbine (12) is below the ambient pressure.

2. Operating method according to claim 1, **characterized in that** the fluid is wet steam or saturated steam.

3. Operating method according to claim 1 or 2, comprising the further steps of
a) evaporating (100) a liquid heat transfer medium (56, 214) so that vaporous fluid is obtained,
e) condensing (108) the vaporous fluid after it has flowed through the turbine (12) so that liquid heat transfer medium (56, 214) is obtained.

4. Operating method according to claim 3, **characterized in that** the turbine (12) is designed as a steam turbine (218),
**in that**, in order to carry out step a), a line system which connects a relaxation evaporator (54, 212) to a condenser (16, 226) via the supply line (32, 216), the steam turbine (218) and a discharge line (34, 228) is evacuated (302) so that the pressure everywhere in the line system is below the ambient pressure and so that heat transfer medium (56, 214) evaporates in the relaxation evaporator (54, 212),
**in that**, in particular when carrying out step d), the electrical load on the generator (14, 220) is changed (304), and **in that** the vacuum breaker (66, 238) is opened (308, 312).

5. Operating method according to claim 4, **characterized in that**, simultaneously, the vacuum breaker (66, 238) is opened (312), a volume flow of liquid heat transfer medium (56, 214) flowing into the relaxation evaporator (54, 212) is reduced (314), in particular reduced to zero, and electrical energy from the generator (14, 220) is converted into heat (316) in a braking resistor (40).

6. Operating method according to any of the preceding claims, **characterized in that** the temperature of the fluid introduced into the supply line (32, 216) is at most 110°C, preferably at most 100°C, particularly preferably at most 90°C.

7. Operating method according to any of the preceding claims, **characterized in that** a liquid is injected into the supply line (32, 216) upstream of the generator (14, 220).

8. Low-pressure steam turbine system (52, 210) having a turbo set (10, 248) comprising a turbine (12) which is designed as an axial turbine, and a generator (14, 220) which is arranged within a supply line (32, 216) to the turbine (12), the turbine (12) being designed for an inflow from the direction of the generator (14, 220), and the turbine (12) being designed as a low-pressure steam turbine,
**characterized**
**by** a relaxation evaporator (54, 212) for evaporating liquid heat transfer medium (56, 214) so that vaporous fluid is obtained,
and in that the supply line (32, 216) leads the vaporous fluid formed in the relaxation evaporator (54, 212) past the generator (14, 220) for pressure reduction of the vaporous fluid into the turbine (12),
and in that the low-pressure steam turbine system (52, 210) is designed such that the pressure in the relaxation evaporator (54, 212), the supply line (32, 216) and the turbine (12) is below the ambient pressure during normal operation.

9. Low-pressure steam turbine system (52, 210) according to claim 8, **characterized in that** a turbine wheel (24, 250) of the turbine (12) and a rotor (36, 260) of the generator (14, 220) are rotatable about a common longitudinal axis (40, 264), in particular **in that** the turbine wheel (24, 250) and the rotor (36, 260) are arranged on a common shaft (28, 254).

10. Low-pressure steam turbine system (52, 210) according to claim 8 or 9, **characterized in that** a guide wheel (26, 252) of the turbine (12) is arranged between the generator (14, 220) and a turbine wheel (24, 250) of the turbine (12).

11. Low-pressure steam turbine system (52, 210) according to any of claims 8 to 10, **characterized in that** a stator (38, 262) of the generator (14, 220) is arranged in an inner housing (46, 270), and in particular the inner housing (46, 270) has cooling ribs (50, 274) on the outside.

12. Low-pressure steam turbine system (52, 210) according to any of claims 8 to 11, further comprising
- a condenser (16, 226) for condensing the vaporous fluid exiting the turbine (12) during operation so that liquid heat transfer medium (56, 214) is obtained, wherein the pressure in the condenser (16, 226) is below the ambient pressure, and preferably
- a return device for returning liquid heat transfer medium (56, 214) from the condenser (16, 226) to the relaxation evaporator (54, 212).

13. Low-pressure steam turbine system (52, 210) according to any of claims 8 to 12, further comprising
- a vacuum breaker (66, 238) arranged downstream of a turbine wheel (24, 250) of the turbine (12),
- power electronics (70, 222) for connecting the generator (14, 220) to a load and/or a power grid, and
- a control unit (68, 224) which is designed to change the electrical load on the generator (14, 220) via the power electronics (70, 222) and to open the vacuum breaker (66, 238).

14. Low-pressure steam turbine system (52, 210) according to claim 13, further comprising
- a feed pump (58, 234) for conveying liquid heat transfer medium (56, 214) into the relaxation evaporator (54, 212), wherein the control unit (68, 224) is designed to change a conveying rate of the feed pump (58, 234), and/or
- a braking resistor (240), in particular wherein the control unit (68, 224) is designed to convert electrical energy from the generator (14, 220) into heat in the braking resistor (240).

## Revendications

1. Procédé d'exploitation destiné à un groupe turbogénérateur (10, 248) comprenant une turbine (12) et un générateur (14, 220) logé à l'intérieur d'un conduit d'amenée (32, 216) gagnant ladite turbine (12),
incluant les étapes résidant dans
b) l'introduction (102), dans ledit conduit d'amenée (32, 216), d'un fluide gazeux sous forme de vapeur,
c) la mise en circulation (104) dudit fluide en regard du générateur (14, 220),
d) l'entraînement (106) de la turbine (12) au moyen dudit fluide,
sachant qu'un écoulement dudit fluide est dirigé vers la turbine (12) à partir du générateur (14, 220),
et sachant qu'une pression, régnant dans le conduit d'amenée (32, 216) et dans la turbine (12), est inférieure à la pression environnante.

2. Procédé d'exploitation selon la revendication 1, **caractérisé par le fait que** le fluide est de la vapeur humide ou de la vapeur saturée.

3. Procédé d'exploitation selon la revendication 1 ou 2, incluant les étapes supplémentaires résidant dans
a) la vaporisation (100) d'un agent caloporteur liquide (56, 214), de manière à obtenir un fluide sous forme de vapeur,
e) la condensation (108) dudit fluide sous forme de vapeur, après qu'il a parcouru la turbine (12), de manière à obtenir de l'agent caloporteur liquide (56, 214).

4. Procédé d'exploitation selon la revendication 3, **caractérisé par le fait que** la turbine (12) est réalisée en tant que turbine à vapeur (218) ;
**par le fait que**, pour exécuter l'étape a), un système de conduits reliant un vaporisateur instantané (54, 212) à un condenseur (16, 226) par l'intermédiaire du conduit d'amenée (32, 216), de ladite turbine à vapeur (218) et d'un conduit d'évacuation (34, 228), est mis sous vide (302) de telle manière que la pression, régnant dans ledit système de conduits, soit partout inférieure à la pression environnante, et de façon telle que de l'agent caloporteur (56, 214) se vaporise dans ledit vaporisateur instantané (54, 212) ;
**par le fait que** la charge électrique du générateur (14, 220) est modifiée (304), en particulier, au cours de l'exécution de l'étape d) ;
et **par le fait que** le casse-vide (66, 238) est ouvert (308, 312).

5. Procédé d'exploitation selon la revendication 4, **caractérisé par le fait que**, de manière simultanée, le casse-vide (66, 238) est ouvert (312) ; un débit volumique d'agent caloporteur liquide (56, 214) parvenant dans le vaporisateur instantané (54, 212) est réduit (314), notamment réduit à zéro; et de l'énergie électrique émanant du générateur (14, 220) est convertie (316) en de la chaleur dans une résistance de freinage (40).

6. Procédé d'exploitation selon l'une des revendications précédentes, **caractérisé par le fait qu'**une température du fluide introduit dans le conduit d'amenée (32, 216) est au maximum de 110 °C, préférentiellement de 100 °C au maximum, au maximum de 90 °C avec préférence particulière.

7. Procédé d'exploitation selon l'une des revendications précédentes, **caractérisé par le fait qu'**un liquide est injecté dans le conduit d'amenée (32, 216) en amont du générateur (14, 220).

8. Installation (52, 210) comportant une turbine à vapeur basse pression, équipée d'un groupe turbogénérateur (10, 248) comprenant une turbine (12) réalisée sous la forme d'une turbine axiale et un générateur (14, 220) logé à l'intérieur d'un conduit d'amenée (32, 216) gagnant ladite turbine (12), laquelle turbine (12) est conçue pour un afflux provenant de la direction dudit générateur (14, 220), ladite turbine (12) étant réalisée sous la forme d'une turbine à vapeur basse pression,
**caractérisée**
**par** un vaporisateur instantané (54, 212) affecté à la vaporisation d'agent caloporteur liquide (56, 214), de manière à obtenir un fluide sous forme de vapeur ;
par le fait que le conduit d'amenée (32, 216) introduit, dans la turbine (12), le fluide sous forme de vapeur engendré dans ledit vaporisateur instantané (54, 212), avec circulation en regard du générateur (14, 220), de manière à détendre ledit fluide sous forme de vapeur ; et par le fait que ladite installation (52, 210) à turbine à vapeur basse pression est conçue de façon telle que, dans le mode fonctionnel conforme à la destination, la pression régnant dans ledit vaporisateur instantané (54, 212), dans ledit conduit d'amenée (32, 216) et dans ladite turbine (12), soit inférieure à la pression environnante.

9. Installation (52, 210) selon la revendication 8, comportant une turbine à vapeur basse pression et **caractérisée par le fait qu'**une roue (24, 250) de la turbine (12) et un rotor (36, 260) du générateur (14, 220) peuvent tourner autour d'un axe longitudinal commun (40, 264) ; notamment **par le fait que** ladite roue (24, 250) de la turbine, et ledit rotor (36, 260), sont implantés sur un arbre commun (28, 254).

10. Installation (52, 210) selon la revendication 8 ou 9, comportant une turbine à vapeur basse pression et **caractérisée par le fait qu'**une roue canalisatrice (26, 252) de la turbine (12) est interposée entre le générateur (14, 220) et une roue (24, 250) de ladite turbine (12).

11. Installation (52, 210) selon l'une des revendications 8 à 10, comportant une turbine à vapeur basse pression et **caractérisée par le fait qu'**un stator (38, 262) du générateur (14, 220) est logé dans un carter intérieur (46, 270), sachant notamment que ledit carter intérieur (46, 270) est extérieurement pourvu de nervures de refroidissement (50, 274).

12. Installation (52, 210) selon l'une des revendications 8 à 11, comportant une turbine à vapeur basse pression et présentant, en outre,
- un condenseur (16, 226) dévolu à la condensation du fluide sous forme de vapeur sortant de la turbine (12), en service, de manière à obtenir de l'agent caloporteur liquide (56, 214), la pression régnant dans ledit condenseur (16, 226) étant inférieure à la pression environnante,
et, de préférence,
- un dispositif de réintroduction conçu pour réintroduire, dans le vaporisateur instantané (54, 212), de l'agent caloporteur liquide (56, 214) provenant dudit condenseur (16, 226).

13. Installation (52, 210) selon l'une des revendications 8 à 12, comportant une turbine à vapeur basse pression et présentant, en outre,
- un casse-vide (66, 238) implanté en aval d'une roue (24, 250) de la turbine (12),
- une électronique de puissance (70, 222) dédiée au raccordement du générateur (14, 220) à un appareil consommateur et/ou à un réseau électrique, et
- une unité de commande (68, 224) agencée pour faire varier la charge électrique dudit générateur (14, 220), par l'intermédiaire de ladite électronique de puissance (70, 222), et pour ouvrir ledit casse-vide (66, 238).

14. Installation (52, 210) selon la revendication 13, comportant une turbine à vapeur basse pression et présentant, en outre,
- une pompe d'alimentation (58, 234) destinée à refouler de l'agent caloporteur liquide (56, 214) dans le vaporisateur instantané (54, 212), l'unité de commande (68, 224) étant conçue pour faire varier une capacité de refoulement de ladite pompe d'alimentation (58, 234), et/ou
- une résistance de freinage (240), sachant notamment que ladite unité de commande (68, 224) est agencée pour convertir en de la chaleur, dans ladite résistance de freinage (240), de l'énergie électrique émanant du générateur (14, 220).
